# EUROPEAN PATENT APPLICATION

(11) **EP 4 742 190 A1**
(43) Date of publication of application: **13.05.2026**
(21) Application number: 25215240.0
(22) Date of filing: 12.11.2025
(51) Int. Cl.: G06V 20/52, G06V 10/22, G06V 10/26

(54) **SYSTEM AND METHOD FOR PROXIMITY SEARCHING**

(30) Priority: 12.11.2024 US 202463719314 P; 12.11.2024 US 202463719473 P; 16.09.2025 US 202563882922 P; 17.09.2025 US 202563883233 P
(71) Applicant: Genetec Inc., St-Laurent, Québec H4S 2A4 (CA)
(72) Inventor: ROONEY, Christopher, Stockport, SK8 5NE (GB); KODAGODA, Neesha, Watford, WD19 5EW (GB); KIMBER, Helen, Brighton and Hove Brighton, BN2 0GW (GB)
(74) Representative: Kramer Barske Schmidtchen Patentanwälte PartG mbB

(57) **Abstract**

A method for proximity searching in a surveillance system comprises receiving a request to perform, over a period of interest, a proximity search related to a first object depicted in a first image captured by a selected media device, the request received as a result of user input, obtaining media data captured by one or more media devices during the period of interest, identifying, based on the media data, one or more second objects exhibiting a spatial proximity and a temporal proximity with the first object during the period of interest, and, for each of the one or more second objects, obtaining, based on the media data, a second image depicting the second object, the second image captured at a time at which the second object exhibited the spatial proximity and the temporal proximity with the first object, and outputting the second image.

## Description

### CROSS-REFERENCE TO RELATED APPLICATIONS

The present application claims the benefit of United States Provisional Patent Applications No. 63/719,473, filed on November 12, 2024, No. 63/882,922, filed on September 16, 2025, No. 63/719,314, filed on November 12, 2024, and No. 63/883,233, filed on September 17, 2025.

### Field

The present disclosure relates generally to physical security and surveillance, and more specifically to proximity detection and searching in a surveillance system.

### Background

A surveillance system is a network of various devices employed to monitor activities and behaviours of persons or other objects in a particular area being surveilled. A surveillance system may collect information from a variety of sources, centralize that information, and make the information available to surveillance personnel to aid them in making decisions relating to the safety of persons or other objects within the area being surveilled. A surveillance network may include any suitable number of devices for collecting information, including cameras, microphones, access card readers, and the like, as well as any number of monitors or other interfaces for presenting information to operators of the surveillance system. However, due to the large number of devices involved in the surveillance network, it may prove complex and time-consuming to provide surveillance personnel with information in a clear, concise, and actionable manner.

Therefore, there is a need for improvement.

### Summary

The following presents a simplified summary of one or more implementations in accordance with aspects of the present disclosure in order to provide a basic understanding of such implementations, without limiting the embodiments presented within the present disclosure. To facilitate contextual awareness and forensic investigations by, for instance, security personnel, the present disclosure describes techniques for identifying objects (whether persons or otherwise) which were present within temporal and/or geographical proximity (also referred to herein as spatial proximity) of an object of interest. After the object of interest is identified, for instance based on user input from security personnel, the system identifies one or more proximate objects which were temporally and/or spatially collocated with the object of interest and presents information relating to the proximate objects via a graphical user interface.

In accordance with a broad aspect, there is provided a method for proximity searching in a surveillance system, the surveillance system comprising a plurality of media devices deployed at a monitored location, the method comprising receiving a request to perform, over a period of interest, a proximity search related to a first object depicted in a first image captured by a selected one of the plurality of media devices, the request received as a result of user input; obtaining media data captured by one or more of the plurality of media devices during the period of interest; identifying, based on the media data, one or more second objects exhibiting a spatial proximity and a temporal proximity with the first object during the period of interest; and, for each of the one or more second objects, obtaining, based on the media data, a second image depicting the second object, the second image captured at a time at which the second object exhibited the spatial proximity and the temporal proximity with the first object, and outputting the second image.

In at least one embodiment in accordance with any previous/other embodiment described herein, the method further comprises, prior to receiving the request to perform the proximity search, receiving a demand to display selected media data captured by the selected media device; displaying the selected media data and an indication of a plurality of potential objects of interest depicted in the selected media data; and receiving the user input comprising a selection of the first object among the plurality of potential objects of interest.

In at least one embodiment in accordance with any previous/other embodiment described herein, obtaining the media data comprises one of obtaining the media data captured by the selected media device; obtaining the media data captured by ones of the plurality of media devices other than the selected media device; and obtaining the media data captured by at least some of the plurality of media devices.

In at least one embodiment in accordance with any previous/other embodiment described herein, identifying the one or more second objects comprises tracking the first object within a plurality of images associated with the media data, thereby generating first metadata; tracking a plurality of objects within the plurality of images, thereby generating second metadata; comparing the first metadata to the second metadata to determine a degree of the spatial proximity and the temporal proximity that each of the plurality of objects exhibits with the first object; and identifying the one or more second objects among the plurality of objects based on the comparing.

In at least one embodiment in accordance with any previous/other embodiment described herein, the method further comprises implementing an object segmentation technique to detect the first object in the first image based on the request; and tracking the first object within additional images associated with the media data.

In at least one embodiment in accordance with any previous/other embodiment described herein, the method further comprises associating a first representation with the first object, wherein the first object is tracked within the additional images using the first representation.

In at least one embodiment in accordance with any previous/other embodiment described herein, identifying the one or more second objects comprises querying at least one database having stored therein, for each object depicted in the additional images, a second representation, time metadata indicative of a time at which the object was detected, and location metadata indicative of a location of the object when detected; and identifying the one or more second objects based on the second representation, the time metadata, and the location metadata.

In at least one embodiment in accordance with any previous/other embodiment described herein, the method further comprises generating, based on the media data, an indication of the spatial proximity between the second object and the first object; and outputting the indication of the spatial proximity along with the second image.

In at least one embodiment in accordance with any previous/other embodiment described herein, the method further comprises generating, based on the media data, an indication of the temporal proximity between the second object and the first object; and outputting the indication of the temporal proximity along with the second image.

In at least one embodiment in accordance with any previous/other embodiment described herein, the method further comprises generating and outputting an indication of at least one of an elapsed time since the second object exhibited the spatial proximity and the temporal proximity with the first object, a duration for which the second object exhibited the spatial proximity and the temporal proximity with the first object, a location of the second object when the second object exhibited the spatial proximity and the temporal proximity with the first object, and a distance between the second object and the first object when the second object exhibited the spatial proximity and the temporal proximity with the first object.

In at least one embodiment in accordance with any previous/other embodiment described herein, the method further comprises selecting one of a plurality of colours for a visual indicator, each colour of the plurality of colours associated with a respective level of a plurality of levels representative of the spatial proximity and the temporal proximity, and displaying the visual indicator as an indication of the spatial proximity and the temporal proximity.

In at least one embodiment in accordance with any previous/other embodiment described herein, the second image is output for each of the one or more second objects to obtain a plurality of second images arranged in chronological order based on the temporal proximity.

In at least one embodiment in accordance with any previous/other embodiment described herein, the user input comprises a delineation of at least one bounding box circumscribing the first object in the first image.

In at least one embodiment in accordance with any previous/other embodiment described herein, the user input comprises a click interaction selecting the first object in the first image.

In at least one embodiment in accordance with any previous/other embodiment described herein, the user input comprises an actuation of an interface element configured to initiate the proximity search when actuated.

In at least one embodiment in accordance with any previous/other embodiment described herein, each of the first image and the second image is one of an entire frame from a video feed, a portion of a frame from the video feed, and a portion of the video feed.

In at least one embodiment in accordance with any previous/other embodiment described herein, the video feed is a live video feed captured in real-time.

In at least one embodiment in accordance with any previous/other embodiment described herein, the video feed is an archived video feed retrieved from memory.

In at least one embodiment in accordance with any previous/other embodiment described herein, obtaining the media data comprises retrieving the media data from at least one database.

In at least one embodiment in accordance with any previous/other embodiment described herein, obtaining the media data comprises receiving the media data from the plurality of media devices.

In accordance with another broad aspect, there is provided a system for proximity searching in a surveillance system, the surveillance system comprising a plurality of media devices deployed at a monitored location, the system comprising a processing unit; and a non-transitory computer-readable medium having stored thereon program instructions executable by the processing unit for receiving a request to perform, over a period of interest, a proximity search related to first object depicted in a first image captured by a selected one of the plurality of media devices, the request received as a result of user input; obtaining media data captured by one or more of the plurality of media devices during the period of interest; identifying, based on the media data, one or more second objects exhibiting a spatial proximity and a temporal proximity with the first object during the period of interest; and, for each of the one or more second objects, obtaining, based on the media data, a second image depicting the second object, the second image captured at a time at which the second object exhibited the spatial proximity and the temporal proximity with the first object, and outputting the second image.

In at least one embodiment in accordance with any previous/other embodiment described herein, the proximity search relates to a first person, and the one or more second objects are one or more second persons.

In at least one embodiment in accordance with any previous/other embodiment described herein, the program instructions are executable by the processing unit for, prior to receiving the request to perform the proximity search, receiving a demand to display selected media data captured by the selected media device, displaying the selected media data and an indication of a plurality of potential objects of interest depicted in the selected media data, and receiving the user input comprising a selection of the first object among the plurality of potential objects of interest.

In at least one embodiment in accordance with any previous/other embodiment described herein, the program instructions are executable by the processing unit for obtaining the media data comprising one of obtaining the media data captured by the selected media device, obtaining the media data captured by ones of the plurality of media devices other than the selected media device, and obtaining the media data captured by at least some of the plurality of media devices.

In at least one embodiment in accordance with any previous/other embodiment described herein, the program instructions are executable by the processing unit for identifying the one or more second objects comprising tracking the first object within a plurality of images associated with the media data, thereby generating first metadata, tracking a plurality of objects within the plurality of images, thereby generating second metadata, comparing the first metadata to the second metadata to determine a degree of the spatial proximity and the temporal proximity that each of the plurality of objects exhibits with the first object, and identifying the one or more second objects among the plurality of objects based on the comparing.

In at least one embodiment in accordance with any previous/other embodiment described herein, the program instructions are further executable by the processing unit for implementing an object segmentation technique to detect the first object in the first image based on the request, and tracking the first object within additional images associated with the media data.

In at least one embodiment in accordance with any previous/other embodiment described herein, the program instructions are further executable by the processing unit for associating a first representation with the first object, where the first object is tracked within the additional images using the first representation.

In at least one embodiment in accordance with any previous/other embodiment described herein, the program instructions are executable by the processing unit for identifying the one or more second objects comprising querying at least one database having stored therein, for each object depicted in the additional images, a second representation, time metadata indicative of a time at which the object was detected, and location metadata indicative of a location of the object when detected, and identifying the one or more second objects based on the second representation, the time metadata, and the location metadata.

In at least one embodiment in accordance with any previous/other embodiment described herein, the program instructions are further executable by the processing unit for generating, based on the media data, an indication of the spatial proximity between the second object and the first object, and outputting the indication of the spatial proximity along with the second image.

In at least one embodiment in accordance with any previous/other embodiment described herein, the program instructions are further executable by the processing unit for generating, based on the media data, an indication of the temporal proximity between the second object and the first object, and outputting the indication of the temporal proximity along with the second image.

In at least one embodiment in accordance with any previous/other embodiment described herein, the program instructions are further executable by the processing unit for generating and outputting an indication of at least one of an elapsed time since the second object exhibited the spatial proximity and the temporal proximity with the first object, a duration for which the second object exhibited the spatial proximity and the temporal proximity with the first object, a location of the second object when the second object exhibited the spatial proximity and the temporal proximity with the first object, and a distance between the second object and the first object when the second object exhibited the spatial proximity and the temporal proximity with the first object.

In at least one embodiment in accordance with any previous/other embodiment described herein, the program instructions are further executable by the processing unit for selecting one of a plurality of colours for a visual indicator, each colour of the plurality of colours associated with a respective level of a plurality of levels representative of the spatial proximity and the temporal proximity, and displaying the visual indicator as an indication of the spatial proximity and the temporal proximity.

In at least one embodiment in accordance with any previous/other embodiment described herein, herein the second image is output for each of the one or more second objects to obtain a plurality of second images arranged in chronological order based on the temporal proximity.

In at least one embodiment in accordance with any previous/other embodiment described herein, the user input comprises a delineation of at least one bounding box circumscribing the first object in the first image.

In at least one embodiment in accordance with any previous/other embodiment described herein, the user input comprises a click interaction selecting the first object in the first image.

In at least one embodiment in accordance with any previous/other embodiment described herein, the user input comprises an actuation of an interface element configured to initiate the proximity search when actuated.

In at least one embodiment in accordance with any previous/other embodiment described herein, each of the first image and the second image is one of an entire frame from a video feed, a portion of a frame from the video feed, and a portion of the video feed.

In at least one embodiment in accordance with any previous/other embodiment described herein, the video feed is a live video feed captured in real-time.

In at least one embodiment in accordance with any previous/other embodiment described herein, the video feed is an archived video feed retrieved from memory.

In at least one embodiment in accordance with any previous/other embodiment described herein, the program instructions are executable by the processing unit for obtaining the media data comprising retrieving the media data from at least one database.

In at least one embodiment in accordance with any previous/other embodiment described herein, the program instructions are executable by the processing unit for obtaining the media data comprising receiving the media data from the plurality of media devices.

### Brief Description of the Drawings

For a more complete understanding of the present disclosure, reference is now made to the accompanying drawings. The following brief descriptions of the drawings should not be considered limiting in any fashion.
Fig. 1 is a block diagram of an example surveillance system, in accordance with one embodiment;
Fig. 2 is a block diagram of the proximity search engine of Fig. 1, in accordance with one embodiment;
Fig. 3A, Fig. 3B, and Fig. 3C are examples of a graphical user interface generated using the proximity search engine of Fig. 1, in accordance with one embodiment;
Figs. 3D, 3E, 3F, and 3G are examples of a graphical user interface generated using the proximity search engine of Fig. 1, in accordance with another embodiment;
Fig. 4 is a flowchart of an example method for proximity searching, in accordance with one embodiment; and
Fig. 5 is a block diagram of an example computing device, in accordance with one embodiment.

It will be noted that throughout the appended drawings that like features are identified by like reference numerals.

### Detailed Description

The present disclosure relates to, *inter alia,* methods, systems, devices, and computer-readable media for proximity searching in a surveillance system. In one embodiment, the systems and methods described herein may be used by operators of a surveillance system (e.g., an area monitoring system) to obtain information regarding events that occurred at a monitored location or site. The systems and methods described herein may indeed be used to provide more context to operators (e.g., surveillance personnel) as they are viewing video content within the surveillance system. In one embodiment and as will be described further below, an operator reviewing video content may request for a proximity search to be performed by interacting with at least one object or person (referred to herein as an "object of interest") depicted in the video. As a result, the system provides the user with information about object(s) that were in proximity to the at least one object of interest during a given period of time (referred to herein as a "period of interest"). The proximity search may be performed by first identifying where the object of interest was, across one or more cameras, backwards in time (and potentially forwards if the proximity search request is performed on archived video content). Other objects that were seen by the camera(s) or by other nearby cameras (that are geographically proximate) at similar times are then identified.

As used herein, the terms "proximate" and "proximity", when used in relation to two objects, apply both temporally and geographically. Indeed, as used herein, these terms refer to the fact that the two objects are physically close in space, which may include objects located within a predefined distance of one another, located within the same physical location (a room, a hallway, a delimited outdoor space, etc.), located within a predefined distance from another object or location, or the like. This is referred to as "geographical proximity" or "spatial proximity". The terms "proximate" and "proximity", as used herein, also refer to the fact that detection of the two objects occurred close in time, i.e. the two objects were detected within a predefined time window. This is referred to as "temporal proximity". Therefore, and as will be described further below, the proximity search engine 106 is configured to provide information regarding one or more objects that were collocated with the object of interest (i.e. the objects were physically located jointly or together and shared the same physical space), including as the object of interest moved around the premises. For example, if the object of interest is a person that recently entered through an entrance, the systems and methods described herein may be configured to identify all the people who also recently entered via the same entrance, even if thereafter these people went their separate ways.

Reidentifying a given person in surveillance footage, whether from a common camera or across multiple cameras, presents particular challenges: a given person may change their pose, facial expressions, clothes, etc. at any time, thereby complicating simple visual reidentification. In addition, people are not associated with objective unique identifiers from which they can be identified. As a result, particular techniques for handling the constantly evolving visual representation of persons may be employed to facilitate their reidentification.

It should be understood that the systems and methods described herein may be used for a variety of applications. For example, the systems and methods described herein may be used to detect person(s) that interacted with (or were around) object(s) of interest during a given time period (e.g., people loading or unloading objects from a vehicle or facility, people exchanging objects, etc.), whether someone tailgated to enter a building, or the like. Thus, it should also be understood that the object(s) of interest and the proximate object(s) may be of a same or different type or category. Indeed, while the object(s) of interest and the proximate object(s) may, in some embodiments, be people, other embodiments may apply. For example, when an object of interest is a seemingly abandoned piece of luggage, it may be desirable to use the systems and methods described herein to search for persons that were in proximity of the luggage. In addition, or alternatively to searching for persons, it may also be desirable to use the systems and methods described herein to search for other objects that were in proximity of the luggage, such as carts or luggage carriers, people movers, or the like.

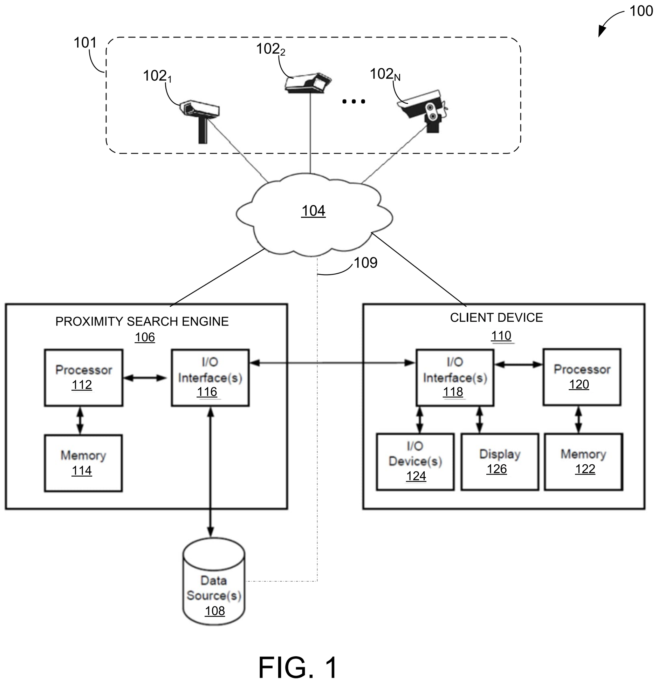

Fig. 1 illustrates an example surveillance system 100. The system 100 may be an area monitoring system, such as the one described in U.S. Patent No. 10,885,066, the contents of which are hereby incorporated by reference. The system 100 comprises one or more electronic devices 101 disposed at various locations within a geographical area. The one or more electronic devices 101 are used to monitor objects, events, places, and/or people of interest within the geographical area and to generate data accordingly. As a result of such monitoring, the devices 101 may generate media streams (also referred to herein as "media data"), which may include image data, video data (e.g., metadata, compressed video data, and/or uncompressed video data), and/or audio data. The media streams may be provided in real-time or non-real-time. Examples of the one or more electronic devices 101 include, but are not limited to, cameras (e.g., digital video cameras) 102₁, 102₂, ..., 102_{N}, video and/or audio encoders connected to analog device(s) or appliance(s), audio microphones, radars, components of access control systems (e.g., access card readers), door stations, intercoms, sensors, Internet of Things (IoT) devices, and the like. It should be understood that any suitable number of devices 101 may apply. When the system 100 comprises several devices 101, these may be located in close proximity to one another, for instance in the same building or on the same city block, or they may be remote from one another, for instance, located in different parts of the same city or in different cities altogether. Embodiments involving clusters of devices 101 may also be considered, where devices 101 belonging to one of a number of clusters may be geographically proximate to one another while the clusters themselves may be remote from one another. Additionally, in some embodiments, one or more of the devices 101 may be mobile, such that their location changes over time.

Event(s) of interest may be associated with data acquired by the devices 101 (e.g., video feed(s) captured by the cameras 102₁, 102₂, ..., 102_{N}) and stored in one or more data sources (e.g., databases) 108, as "occurrence records" (also referred to herein as "event occurrence records"). As used herein, the term "occurrence record" refers to information indicative of an event stored or provided by a data source 108 and that may be accessed or obtained from the data source 108. The data source 108 may be or may comprise a database that stores occurrence records. The occurrence record has an occurrence record type (indicative of the nature or type of the occurrence record), and may have at least one time parameter (i.e. a parameter specifying time, such as a timestamp, a time interval, or a period of time) and at least one geographical parameter (i.e. a location, such as Global Positioning System (GPS) coordinates, a location range or distance, or an area defined by a set of coordinates). The occurrence record may have other metadata and data associated with additional parameters. The data structure of the occurrence record may depend upon the configuration of the data source and/or database in which the occurrence record is stored. Examples of occurrence records are surveillance video analytics, access control events associated with a time and location, the identity of a registered criminal with a location of the criminal, 911 call events or computer-aided dispatch (CAD) events with a time parameter, geographical parameter, a narrative and/or a priority value, a gunshot event associated with the picking up of a sound that is identified to be a gunshot having a time parameter, a geographical parameter and the identification of the firearm, a traffic accident event with a time parameter and a location parameter, etc.

The electronic devices 101 are communicatively coupled, over a network 104, to a proximity search engine 106 which is in communication with the one or more data sources 108. The network 104 may comprise any suitable network including, but not limited to, a Personal Area Network (PAN), Local Area Network (LAN), Wireless Local Area Network (WLAN), Metropolitan Area Network (MAN), or Wide Area Network (WAN), or combinations thereof. The proximity search engine 106 may store or archive data from the devices 101 (e.g., in a memory 114, in one or more of the data sources 108, etc.). **It** should be understood that, in some embodiments, the devices 101 may have a direct connection 109 with the data source(s) 108 and may thus feed data into the data source 108 directly (e.g., via connection 109 and network 104), without going through the proximity search engine 106. The data from the devices 101 may also be fed to another data source (not shown) distinct from the data source 108 and which may be coupled to the proximity search engine 106.

Still referring to Fig. 1, the proximity search engine 106 may be a server-based system in communication with one or multiple client devices 110 that may, in some embodiments, also be configured to access the network 104. The proximity search engine 106 is illustratively configured to obtain data from the devices 101 (and/or any suitable component of the system 100) and may store the data (e.g., in the data source(s) 108). As will be discussed further below, the proximity search engine 106 is also configured to transmit data (e.g., video feeds) obtained from the devices 101, along with any additional relevant information that may be retrieved from the data source(s) 108, to the one or more client devices 110 for presentation on a graphical user interface (GUI). The proximity search engine may be internal or "on-site", located in close proximity to the client device 110, for instance in the same building, or may be external or "off-site", located remotely from the client device 110, for instance in a remote data center. The proximity search engine 106 may be a cloud-based system.

The proximity search engine 106 has at least one processor 112, memory 114, and at least one input/output (I/O) interface 116 for communication with the one or more data sources 108, and/or an I/O interface 118 of the client device 110. The one or more data sources 108 may be one or more external database(s), one or more external systems, for example, having one or more databases, that are accessible via Application Programming Interface (API) calls, and/or one or more local databases that are part of the proximity search engine 106.

The processor 112 may be a general-purpose programmable processor. In the example of Fig. 1, the processor 112 is shown as being unitary, but the processor 112 may also be multicore, or distributed (e.g. a multi-processor).

The computer readable memory 114 stores program instructions and data used by the processor 112. The computer readable memory 114 may also store locally the data obtained from the electronic devices 101, acting as a local database. The memory 114 may also store information regarding the data source(s) 108 that are accessible by the proximity search engine 106, such as the identity of the data source(s) 108, the configuration type of the data source(s) 108, and the like. The computer readable memory 114, though shown as unitary for simplicity in the example of Fig. 1, may comprise multiple memory modules and/or caching. In particular, the memory 114 may comprise several layers of memory such as a hard drive, external drive (e.g. SD card storage) or the like and a faster and smaller Random Access Memory (RAM) module. The RAM module may store data and/or program code currently being, recently being or soon to be processed by the processor 112 as well as cache data and/or program code from a hard drive. A hard drive may store program code and be accessed to retrieve such code for execution by the processor 112 and may be accessed by the processor 112 to store and access data. The memory 114 may have a recycling architecture where older data files are deleted when the memory 114 is full or near being full, or after the older data files have been stored in memory 114 for a certain time.

The I/O interface(s) 116 is in communication with the processor 112. The I/O interface(s) 116 may comprise a network interface and may be a wired or wireless interface for establishing a remote connection with, for example, a remote server, an external data source 108, the client device 110, etc. For instance, the I/O interface(s) 116 may be an Ethernet port, a WAN port, a TCP port, etc.

The processor 112, the memory 114 and the I/O interface(s) 116 may be linked via bus connections.

The data source(s) 108 may be one or more remote server(s) comprising one or more databases. A data source 108, and in particular a database, may contain occurrence records and any other relevant information.

In some examples, the proximity search engine 106 may have a local database stored, e.g., in memory 114, that contains occurrence records and any other relevant information.

The client device 110 may be a remote computing device (i.e. client). One or more client devices 110 may be provided, in close proximity to one another, for instance located in the same office or data center, or remote from one another, for instance located in different offices and data centers dispersed across the same city or in different cities altogether.

The client device 110 is in communication with the I/O interface(s) 116 of the proximity search engine 106. The client device 110 has a processor 120, a memory 122, I/O interface(s) 118 that may be linked via bus connections. The client device 110 may have (or be connect to) any suitable I/O device(s) 124, for example, such as a keyboard, a mouse, a touchscreen, etc. The client device 110 may be a desktop computer, a laptop, a smartphone, a tablet, etc. The client device 110 has (or is connect to) a display 126 (e.g. a screen, a tactile display, etc.). The processor 120, the memory 122 and the I/O interface(s) 118 may be similar to the processor 112, the memory 114 and the I/O interface(s) 116, respectively.

A client application program may be stored in memory 122 of the client device 110 that is associated with the proximity search engine 106, the client application program providing the user with an interface to interact with the proximity search engine 106.

In some embodiments, the proximity search engine 106 may include at least one client device 110, where, for instance, the connection between the proximity search engine 106 and the client device 110 may be a wired connection. In some embodiments, the functionality of the proximity search engine 106 and the client device 110 may be implemented on a single computing device.

The client device 110 may be operated by user(s) to access, view, process, and/or analyze information generated by the proximity search engine 106. The information may comprise video information, such as the video feed, as well as relevant information obtained from the data source(s) 108. The client device 110 may be configured to launch a web browser or web application that renders a GUI on the display 126, or may employ the aforementioned client application program to render the GUI on the display 126. The GUI may be used to display outputs and accept inputs and/or commands from user(s) of the client device 110, as will be described further below.

The system 100 may comprise a wide variety of different network technologies and protocols. Communication between the electronic devices 101, proximity search engine 106, data source(s) 108, and client device 110 may occur across wired, wireless, or a combination of wired and wireless networks. The system 100 may include any number of networking devices such as routers, modems, gateways, bridges, hubs, switches, and/or repeaters, among other possibilities, communicatively coupled to the electronic devices 101, proximity search engine 106, data source(s) 108, client device 110 and/or at any point along network 104.

For purposes of illustration, reference is made herein to the system 100 being used for security purposes. However, it should be understood that the system 100 may be used for any other suitable purpose, such as for traffic management and health and safety.

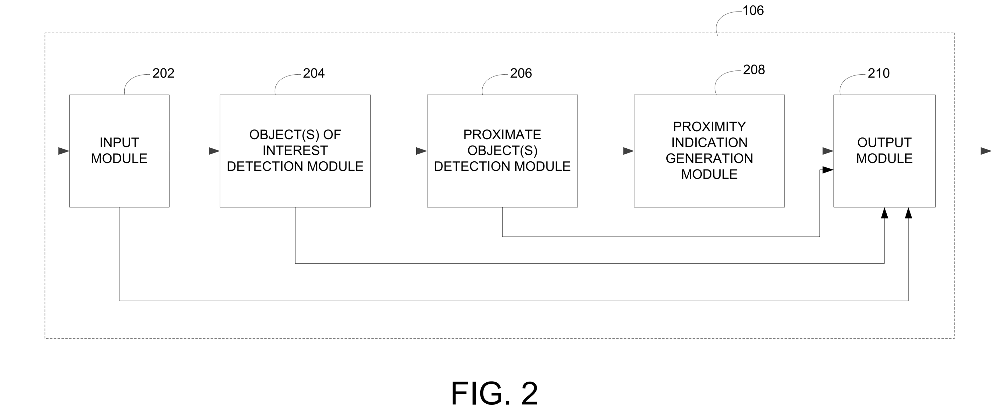

Referring now to Fig. 2 in addition to Fig. 1, an example of the proximity search engine 106 will now be described in accordance with one embodiment. In the illustrated embodiment, the proximity search engine 106 comprises an input module 202, an object(s) of interest detection module 204, a proximate object(s) detection module 206, a proximity indication generation module 208, and an output module 210.

The proximity search engine 106 is configured to receive, at the input module 202, a proximity search request indicating that a search for one or more objects that were proximate to at least one object of interest during a period of interest is to be performed. As will be described further below, the proximity search may be performed based on the media data captured by a single camera (e.g., a given camera as in 102₁ that initially detected the at least one object of interest) or based on the media data captured by multiple ones of the cameras 102₁, 102₂, ..., 102_{N}. The multiple cameras as in 102₁, 102₂, ..., 102_{N} may comprise one or more cameras including the given camera 102₁ or one or more cameras as in 102₁, 102₂, ..., 102_{N} other than (i.e. excluding) the given camera 102₁.

As used herein, the term "period of interest" refers to the period of time during which it is desired to monitor the object of interest. In some cases, the period of interest may be the entire period of time during which the object of interest is known to exist within the monitored location; in some other cases, the period of interest is some duration of time less than the entire period of time. The period of interest may comprise one or more sub-periods of interest, each sub-period of interest being associated with a given one of the cameras 102₁, 102₂, ..., 102_{N}. Indeed, during its displacement within the monitored location, the object of interest may be in the field of view of each of the cameras 102₁, 102₂, ..., 102_{N} (or in the field of view of each camera of a subset of the cameras 102₁, 102₂, ..., 102_{N}) for a given time window, referred to herein as a "sub-period of interest" or a "camera-specific period of interest". The sub-periods of interest may be the same from one camera 102₁, 102₂, ..., 102_{N} to the next or may be different, and the sub-periods of interest may or may not overlap, depending on the distance separating the cameras 102₁, 102₂, ..., 102_{N}. For example, a first camera (e.g. camera 102₁) may detect the object of interest in its field of view during a first time window (e.g., between 10:00 AM and 10:15 AM), which corresponds to a first sub-period of interest, and a second camera (e.g., camera 102₂) may detect the object of interest during a second time window, which corresponds to a second sub-period of interest and which is five (5) minutes later than the first time window (e.g., between 10:20 AM and 10:30 AM). In this case, the first and the second sub-periods of interest do not overlap. Alternatively, the first camera 102₁ may see the object of interest during the first time window (e.g., between 10:00 AM and 10:15 AM) and the second camera 102₂ may see the object of interest during a second time window that overlaps with the first time window (e.g., between 10:10 AM and 10:15 AM). The period of interest may span the entirety of the sub-periods of interest and may be longer than (e.g., start a given time window before and end a given time window after) the individual sub-period of interests. For instance, continuing with the first example provided herein (with two non-overlapping sub-periods of interest), the overall period of interest may range be from 09:55 AM to 10:35 AM (e.g., five (5) minutes before and five (5) minutes after the first and second sub-periods of interest), totalling forty (40) minutes while the first sub-period of interest lasts fifteen (15) minutes (between 10:00 AM and 10:15 AM) and the second sub-period of interest lasts ten (10) minutes (between 10:20 AM and 10:30 AM).

In some embodiments, the overall period of interest (and accordingly the individual camera-specific sub-period(s) of interest) may be configured by the user, e.g. via their client device 110. The user may, for example, set a period of interest and/or adjust (e.g., increase or decrease) the period of interest, for instance from a default value, depending on the size of the monitored location, the nature of the object of interest, or other information, as appropriate. In other embodiments, the period of interest (and accordingly the sub-period(s) of interest) may be a default value set (e.g., automated) by the system 100. The default setting may be based on characteristics of the cameras 102₁, 102₂, ..., 102_{N} or on any other suitable parameter associated with the monitored location. For example, the default setting of each sub-period of interest may be based on each camera's entire retention period. This may be relevant for cameras 102₁, 102₂, ..., 102_{N} with short recording times. The sub-periods of interest may also be set for all cameras 102₁, 102₂, ..., 102_{N} based on their field of view. For instance, a first (referred to herein as "short") period of interest may be used when the system 100 comprises cameras 102₁, 102₂, ..., 102_{N} with a narrow field while a second (referred to herein as "long") period of interest having a longer duration than the first period of interest may be used for cameras 102₁, 102₂, ..., 102_{N} with a long field of view. For instance, a camera viewing a short hallway or a small room may have a default period of interest set at 5 minutes, 10 minutes, 15 minutes, or the like, whereas a camera viewing a football field, a parking lot, or other spacious area may have a comparatively longer default period of interest, such as 30 minutes, 60 minutes, 90 minutes, or the like. By way of another example, a camera viewing a multi-level parking lot may have a default period of interest set at 8 hours, 10 hours, or some other value commensurate with the duration of a typical parking period for someone using the parking lot. The period of interest may also be based on the type of object of interest. For instance, a short period of interest (and accordingly short sub-period(s) of interest) may be set when objects are of interest while a long period of interest (and accordingly long sub-period(s) of interest) may be set when people are of interest. In yet other embodiments, the period of interest (and accordingly the sub-period(s) of interest) may be set based on the speed or amount of motion of the object of interest. For instance, a fast moving object might warrant the setting of a short period of interest while a loitering or lingering object might warrant the setting of a long period of interest. Other embodiments may apply.

Referring back to Fig. 2, the proximity search request may be received, at the input module 202, in response to a user (e.g., an operator of the system 100) interacting with at least one object of interest displayed in a video feed rendered on the display 126 of their client device 110, the video feed captured by the given camera as in 102₁. The video feed may be a live video feed (i.e. displayed in real-time as it is captured by the given camera 102₁) or a pre-recorded (or archived) video feed (i.e. retrieved from a memory where it was stored after having been captured by the given camera 102₁). The user may interact with the object of interest within a frame (also referred to herein as an "image of interest") of the video feed in any suitable manner and using any suitable input/output means such as the I/O device(s) 124 (e.g., a mouse, a touchscreen, keyboard, or the like). For example, the user may click on the object of interest, draw a bounding box around the object of interest, or the like. Alternatively, the user may interact with a GUI element exterior to the frame (e.g., a dedicated selectable button) to launch a proximity search request, with the input module 102 (or another element of the proximity search engine 106) identifying a prominent object displayed in the video feed as the object of interest. Other approaches by which the user may identify the object of interest are also considered, for instance based on vocal commands, freeform text interpreted by a large-language model (LLM), or the like.

In some embodiments, prior to the proximity search being received at the input module 202, a user demand to display the video feed captured by the given camera 102₁ may first be received at the input module 202. In response, the input module 202 may cause the output module 210 to render the video feed on the display 126 of the client device 110. The output module 210 may be further configured to provide an indication of one or more potential objects depicted in the video feed at (or around) a time at which the user is viewing the video feed. The indication of the potential detected object(s) (e.g., a listing of the potential object(s), a plurality of thumbnails depicting the potential object(s), or the like) may be generated based on the camera metadata. The user may then interact with the display 126 to select the object of interest among the displayed potential object(s) of interest. The user's input may then trigger the generation of the proximity search request which is then received at the input module 202.

In response to receiving the proximity search request, the proximity search engine 106 obtains video data captured by at least some of the cameras 102₁, 102₂, ..., 102_{N} (e.g., by the given camera 102₁ and/or by other nearby cameras 102₂, ..., 102_{N} located proximate the given camera 102₁). The video data may be obtained by accessing live video captured by the cameras 102₁, 102₂, ..., 102_{N} and/or by retrieving archived video from memory (e.g., the memory 114, the data source(s) 108, or the like). The proximity search engine 106 then identifies, based on the video data, the object of interest and its location within the monitored site during the period of interest. This may be achieved by the object(s) of interest detection module 204.

In one embodiment, the object(s) of interest detection module 204 is configured to identify the object of interest based on a tracking of the object through the field of view of the given camera 102₁. The tracking may be performed by the given camera 102₁ itself, for all objects the given camera 102₁ detects, and may result in the generation of metadata which includes a unique identifier (e.g., a unique number) for each object detected in the camera's field of view. Tracking may involve evaluating the spatial location of an object based on those of the cameras 102₁, ..., 102_{N} which have detected the object, based on a topological map of the monitored site, and/or based on any other suitable information, as appropriate. In another embodiment, the object(s) of interest detection module 204 is configured to implement one or more computer vision techniques that allow to identify and track object instances within video frames as the objects move through space (e.g., by associating detections in multiple video frames to the same object). In one embodiment, the object(s) of interest detection module 204 may be configured to implement (e.g., by executing one or more trained machine learning models) an object detection and/or segmentation technique to first detect and localize the object of interest within a frame of the video feed captured by the given camera 102₁, based on the received request (i.e. on the user's interaction with the frame). Upon detecting and localizing the object of interest within the frame, the object(s) of interest detection module 204 may, in some embodiments, provide (e.g., via the output module 210) the detection and localization result to the user (e.g., via the GUI rendered on the display 126 of their client device 110) for validation purposes. The object(s) of interest detection module 204 may then associate a unique representation (or identifier) with the detected object of interest. The object's representation may be generated in any suitable manner, such as using one or more trained machine learning models.

In one embodiment, the object's representation is a feature vector, also referred to herein as a "re-identification vector", which encodes features (e.g., visual features) of the object of interest. It should however be understood that any other suitable identifier that provides a unique representation of the object of interest may apply. In some embodiments, a plurality of reidentification vectors may be generated, by any suitable means (e.g., by executing one or more trained machine learning models), for all video feeds captured by the cameras 102₁, ..., 102_{N}. Each re-identification vector may be assigned to each given object detected in a video feed captured by a given one of the cameras 102₁, ..., 102_{N}. In some embodiments, each reidentification vector is associated with an image (e.g., a cropped image, referred to herein as a "best shot image") of the given object as best seen by the given camera 102₁, ..., 102_{N} when the given camera 102₁, ..., 102_{N} captured the given object entering its field of view. The reidentification vectors may be generated by any suitable component of the system 100. In one embodiment, the re-identification vectors may be generated by the cameras 102₁, ..., 102_{N}. In other embodiments, the re-identification vectors may be generated by a computing device (e.g., a cloud-based processing device, not shown) separate from the cameras 102₁, ..., 102_{N}, as a result of the computing device performing video analytics on the media data captured by the cameras 102₁, ..., 102_{N}. Other embodiments may apply.

The generated re-identification vectors may be stored in a database (or memory), such as in the data source(s) 108 (or memory 114), for subsequent access (e.g., by the proximity search engine 106). **In** some embodiments, each re-identification vector is stored in a database (also referred to herein as a "re-identification vector database") in association with additional data regarding the given object for which the re-identification vector was generated. The additional data may comprise a unique identifier associated with the object. The additional data may also comprise a thumbnail depicting the object. The additional data may further comprise time and location metadata associated with the given object. For example, the location metadata may include, but is not limited to, an identifier of a given camera as in 102₄ that detected the given object, a location of the given camera 102₁, an indication of where in the camera's field of view the given object was detected, a location (e.g., geographical coordinates) of the given object when detected, and the like. The time metadata may include, but is not limited to, the time at which the given object was detected by the given camera 102₁, the time at which the location (e.g., geographical coordinates) of the given object was acquired, and the like.

The object's representation (e.g., the initial re-identification vector associated with the initially-selected object of interest) may be used to track and re-identify the object of interest within other frames of other video feeds captured by the multiple cameras 102₁, 102₂, ..., 102_{N} (e.g., by the given camera 102₁ and/or by other nearby cameras 102₂, ..., 102_{N} located proximate the given camera 102₁) during the period of interest. For this purpose, the object(s) of interest detection module 204 may be configured to query the database storing the re-identification vectors to search for other re-identification vectors which are similar to the initial re-identification vector, and thus find other instances of the object of interest within the other frames. This may be achieved by calculating a similarity score (e.g., a cosine similarity score or any other suitable similarity measure) between the initial re-identification vector and the re-identification vectors obtained from the database. The similarity score may then be compared to a predefined threshold to assess similarity. When two re-identification vectors are found to be similar (i.e. the similarity score is within the threshold), the object(s) of interest detection module 204 determines that the reidentification vectors correspond to the same object (i.e. the object of interest), leading to tracking and re-identification of the object of interest within the corresponding frames, over the period of interest.

In some embodiments, the period of interest spans a timeframe preceding a given point in time, i.e. the period of interest starts a predetermined period of time before the given point in time. For example, the period of interest may span the last hour (i.e. start sixty (60) minutes before the current time). As such, the proximity search engine 106 is configured to search backwards in time, in the video feeds acquired by the cameras 102₁, 102₂, ..., 102_{N} during the period of interest, in order to re-identify (i.e. detect and locate) the object of interest in the video feeds. In other embodiments, the period of interest may span a timeframe following the given point in time, i.e. the period of interest starts a predetermined period of time after the given point in time. This may be the case when the proximity search is performed on archived video. For example, the period of interest may span the next hour (i.e. start sixty (60) minutes after the current time). In yet other embodiments, the period of interest may start a first period of time before the given point in time and end a second period of time after the given point in time. For example, the period of interest may span two (2) hours, including one (1) hour before the given point in time and one (1) hour after the given point in time.

Once the object of interest has been re-identified (i.e. detected and located) by the object(s) of interest detection module 204 across the multiple cameras 102₁, 102₂, ..., 102_{N}, the proximate object(s) detection module 206 is configured to identify one or more other objects that were seen by the cameras 102₁, 102₂, ..., 102_{N} at time(s) similar to the time(s) at which the object of interest was detected. For example, if the object(s) of interest detection module 204 has identified the object of interest in a video feed captured by the given camera 102, (deployed at a given geographical location of the monitored site) at two distinct times, namely two (2) minutes before the current time and thirty (30) seconds before the current time, the proximate object(s) detection module 206 will seek to identify other objects detected by the given camera 102₁ and/or other cameras 102₂, ..., 102_{N} proximate to the given camera 102, (i.e. deployed at geographical locations proximate to the given location) at the same times, namely two (2) minutes before the current time and thirty (30) seconds before the current time.

The identification of the proximate object(s) may be performed within the video feed acquired by the given camera 102₁ and/or across the video feeds of multiple cameras 102₂, ..., 102_{N}. In some embodiments, rather than performing the proximity search based on the entire data associated with all the cameras 102₂, ..., 102_{N} deployed at the monitored location, the system 100 may be configured to identify the proximate object(s) based on data associated with a subset of the cameras 102₂, ..., 102_{N}. For this purpose, the user may specify (e.g., according to the location of the given camera 102₁) the subset of cameras 102₂, ..., 102_{N} based on which the proximity search (and accordingly the identification of the proximate object(s)) is to be performed. The subset of cameras may, for example, include ones of the cameras 102₂, ..., 102_{N} which are within a given radius of the given camera 102₁. The user may alternatively specify physical location(s) of the monitored location (e.g., specific area(s) or room(s) of the building) for which the proximity search is to be performed, and the subset of cameras 102₂, ..., 102_{N} may be determined accordingly (e.g., based on topological information indicative of the physical configuration of the monitored location).

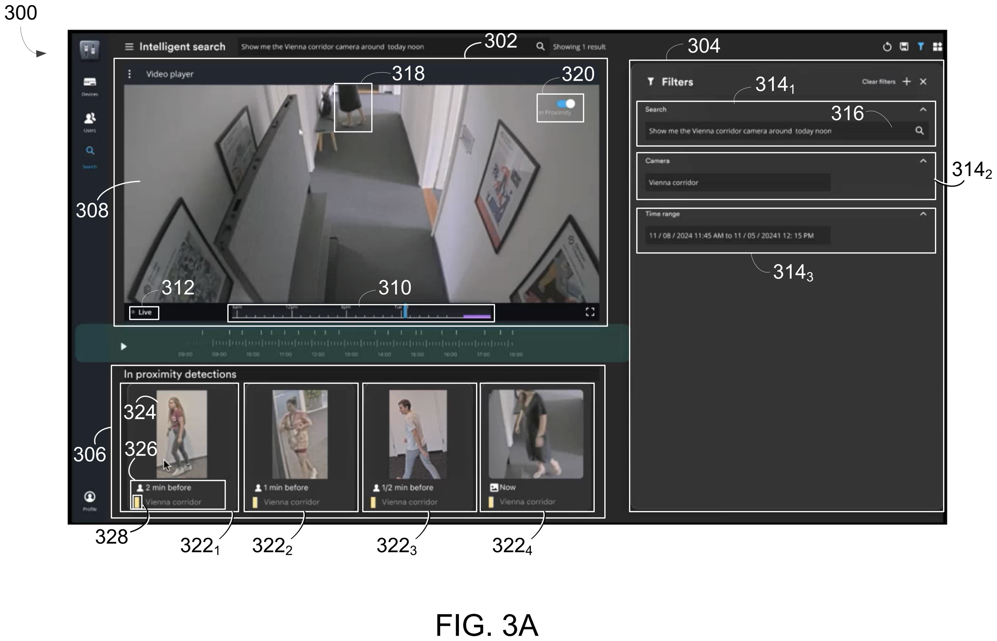

In one embodiment, the proximate object(s) detection module 206 may be configured to identify temporal and spatial collocations (i.e. to identify object(s) located within a same area as the object of interest at similar times). This identification is illustratively based on real-time media data (e.g., live video data, where objects are detected in real-time, whether by a camera as in 102₂, ..., 102_{N}, backend analytics, or the like). The identification of temporal and spatial collocations is further based on data obtained from the re-identification vector database (as described further below) or any other suitable data that is not obtained based on re-identification vector techniques. For instance, the data may be obtained from standard forensic detection (e.g., based on camera metadata). In particular, when the identification of the object(s) of interest is performed (e.g., at the object(s) of interest detection module 204) based on tracking the object(s) through the camera's field of view, the proximate object(s) detection module 206 may compare the metadata generated as a result of the tracking to identify temporal and spatial collocations. For this purpose, any suitable means may be used to compare the metadata associated with the different objects detected by the given camera 102₁ in order to determine whether the detected objects are temporally and spatially proximate. For temporal proximity, the timestamp associated with the metadata for each object may be used for comparison purposes. For spatial proximity, in some cases, it may be sufficient for objects to be seen by (i.e. to be within the field of view of) the given camera 102₁, 102₂, ..., 102_{N} to determine that the objects are in spatial proximity to one another. In other cases, a distance between the bounding boxes (reference 318 in Fig. 3A) circumscribing two (or more) objects of interest (i.e. objects within the field of view of the given camera 102₁, 102₂, ..., 102_{N}) may be computed and compared to a threshold distance to determine whether the two (or more) objects are physically close in space, whether the bounding boxes ever overlapped, and the like. This might be particularly relevant in cases where the given camera 102₁ has a wide field of view (e.g., the given camera 102₁, 102₂, ..., 102_{N} monitors a large parking lot or another similar wide area).

In one embodiment, the proximate object(s) detection module 206 may determine (e.g., based on the data obtained from the re-identification vector database) that a given object is temporally and spatially proximate to the object of interest because the given object (e.g., different from the object of interest due to their re-identification vectors being different) was detected by the given camera 102₁ at a given time, which is within a predefined threshold of the time at which the object of interest was detected by the given camera 102₁. In another example, the proximate object(s) detection module 206 may determine (e.g., based on the data obtained from the reidentification vector database or based on the camera metadata) that the given object is temporally and spatially proximate to the object of interest because the given object was detected at a given time by another camera 102₂, ..., 102_{N} having a location within a threshold distance of the location of the given camera 102₁, and the given time at which the given object was detected is within a predefined threshold of the time at which the object of interest was detected by the given camera 102₁. In yet another example, the proximate object(s) detection module 206 may determine (e.g., based on the data obtained from the re-identification vector database or based on the camera metadata) that the given object is temporally and spatially proximate to the object of interest because the location of the given object (as indicated by its geographical coordinates or inferred based on knowledge of the field of view of the other camera 102₂, ..., 102_{N} that detected the given object) is within the threshold distance of the location of the object of interest, and the given time at which the given object was detected is within a predefined threshold of the time at which the object of interest was detected by the given camera 102₁. Other embodiments may apply.

Although reference is made herein to the proximity search engine 106 operating based on video data (e.g., live video) acquired by the cameras 102₁, 102₂, ..., 102_{N}, it should be understood that the proximity search engine 106 may also draw from data obtained from source(s) other than the cameras 102₁, 102₂, ..., 102_{N}. Indeed, the proximity search engine 106 may obtain media data from any suitable electronic devices 101 including, but not limited to, components of access control systems, door stations, intercoms, sensors, LPR devices, loT devices, and the like. For example, in order to detect object(s) that were proximate with the object of interest, the proximate object(s) detection module 206 may be configured to correlate video data captured by the cameras 102₁, 102₂, ..., 102_{N} with access card reads acquired by access control system during the period of interest. Other embodiments may apply.

Once the object(s) that were proximate to the object of interest have been detected in the video feeds captured by the cameras 102₂, ..., 102_{N}, the proximate object(s) detection module 206 causes (e.g., via the output module 210) images depicting the detected proximate object(s) to be rendered (e.g., via a GUI rendered on the display 126 of the client device 110). The images of the detected proximate object(s) are images captured when the detected objects were in proximity to the object of interest. These images may be obtained in any suitable manner. In one embodiment, the images are best shot images retrieved from memory (e.g., from the database or memory storing the reference re-identification vectors). Each of the images of the detected proximate object(s) may therefore be an entire frame (i.e. as captured by the respective camera 102₂, ..., 102_{N}), a portion of a frame (e.g., a best shot image) or a portion of a video captured by the respective camera 102₂, ..., 102_{N}. In other embodiments, the proximate object(s) detection module 206 may be configured to obtain the images directly from the corresponding cameras 102₂, ..., 102_{N}. In yet other embodiment, the proximate object(s) detection module 206 may be configured to obtain the images from the data source(s) 108 (e.g., by retrieving the images from event occurrence records stored therein). Other embodiments may apply.

In some embodiments, the proximity indication module 208 may be used to generate and output an indication (also referred to herein as a "proximity indication") of the extent of the proximity between the object of interest and the detected object(s). The proximity indication may comprise any suitable information including, but not limited to, the elapsed time since the object was detected as being in proximity of the object of interest, the duration for which the detected object(s) and the object of interest were proximate, the location of the detected object when the latter was proximate to the object of interest, and/or the distance between the detected object and the object of interest when the detected object exhibited spatial proximity and temporal proximity with the object of interest. The proximity indication module 208 may be configured to generate the proximity indication in any suitable manner including, but not limited to, based on a temporal correlation between the video feeds captured by the cameras 102₂, ..., 102_{N}, based on the configuration of the electronic devices 101 and data (e.g., topological information) indicative of the physical configuration of the monitored site, and the like.

It should be understood that, in some cases, the proximity indication module 208 may not explicitly provide the indication of spatial proximity between the object of interest and the detected object(s) since the spatial proximity may inherently stem from the fact that the object of interest and the detected object(s) were in the field of view of (i.e. detected by) a same camera 102₂, ..., 102_{N}. As such, no dedicated indication of spatial proximity (e.g., information regarding the location of the detected object or the distance between the detected object and the object of interest) may be output. Using the proximate object(s) detection module 206 to render images depicting the detected proximate object(s) (as described herein above) may thus suffice as an indicator of spatial proximity in some cases.

In one embodiment, the proximity indication module 208 is further configured to use colour coding in order to provide the proximity indication. In particular, different colours may be used to provide a visual indication of the degree (or level) of proximity between the detected object(s) and the object of interest (to indicate how distant in time collocations of objects were). It should be understood that colour indicator(s) (and any suitable colours) may be used to provide any suitable visual indication of proximity (i.e. a spatial proximity indication and a temporal proximity indication). The colours may be applied in any suitable manner to provide an indication of the proximity level. For example, the colour of a border of the thumbnails (corresponding to the images depicting the detected proximate object(s)) may be changed according to the level of proximity between the detected object(s) and the object of interest. The colour of text associated with the thumbnails may also be changed according to the proximity level. Other embodiments may apply.

One or more thresholds may be set to define the applicable colour codes to be used and it should also be understood that any suitable threshold may apply. For instance, a time threshold of five (5) minutes may be set such that a first colour indicator (e.g., green) is assigned to any object(s) detected when or after the threshold is reached or exceeded (i.e. more than five (5) minutes ago), and a second colour indicator (e.g., yellow) is assigned to any object(s) detected before the threshold is reached (i.e. less than five (5) minutes ago). **In** another example, a green indicator may be displayed when a person of interest was seen with someone else thirty (30) seconds prior to the current time, and a red indicator may be displayed when the person of interest was seen with someone else more than five (5) minutes ago. **In** yet another example, a colour indicator may be used to illustrate the amount of time that a person of interest spent with other person, with different colours being used according to whether the amount of time exceeds or is below a given time threshold. In addition, different colours may be used to represent the extent to which detected objects (e.g., persons) were in spatial proximity to one another: a first colour may be displayed when the persons are touching, a second colour may be displayed when the persons are one (1) meter apart, and a third colour may be displayed when the persons are more than three (3) meters apart. Other embodiments may apply.

Although reference is made herein to the proximity indication module 208 being configured to use colour coding to provide the proximity indication, it should be understood that any other suitable means of providing the proximity indication may apply. Indeed, visual indicators other than colour may also be used, including, but not limited to, applying highlighting, changing the brightness, saturation, or grey level, applying a hatching or similar patterning, and the like. For instance, the proximity indication module 208 may provide the proximity indication by modifying the size of the thumbnails associated with the detected object(s) according to the level of spatial and temporal proximity between the respective detected object(s) and the object of interest. In another embodiment, the proximity indication module 208 may provide the proximity indication by applying a filter to the images based on the temporal proximity level. For example, older images (which indicate that a significant time window has elapsed since the detection of the corresponding objects) may be more greyed out or somewhat transparent compared to more recent images (which indicate that the corresponding objects were detected within a short time window). The proximity indication module 208 may also provide the proximity indication by causing the thumbnails to be presented in an order corresponding to the level of spatial and temporal proximity. For instance, the thumbnails may be arranged based on which detected object was closest to the object of interest, or based on which detected object was nearby the object of interest for the longest period of time. Other embodiments may apply.

It should also be understood that, while reference is made herein to colour indicator(s) being generated in the context of proximity, colour indicator(s) may be used to augment the basic visualization of any suitable data acquired by the electronic devices 101 (e.g., the cameras 102₁, 102₂, ..., 102_{N}) and/or any other suitable component or device of the system 100. Colour coding may therefore by used within the system 100 to visually provide any indication (e.g. other than a proximity indication) that may be relevant in the general context of surveillance. For example, colour indicator(s) may be used to provide an indication of the emergency level associated with an incoming 911 call received at the system 100. In another example, colour indicator(s) may also be used to colour code first responders (e.g., ambulances) getting to a scene where an incident occurred based on how long the first responders are taking to get to the scene. In yet another example, colour indicator(s) may further be used to colour code data acquired by motion cameras based on the amount of time since motion was detected in a room (or other monitored area) where a broken window event happened. Other embodiments may apply.

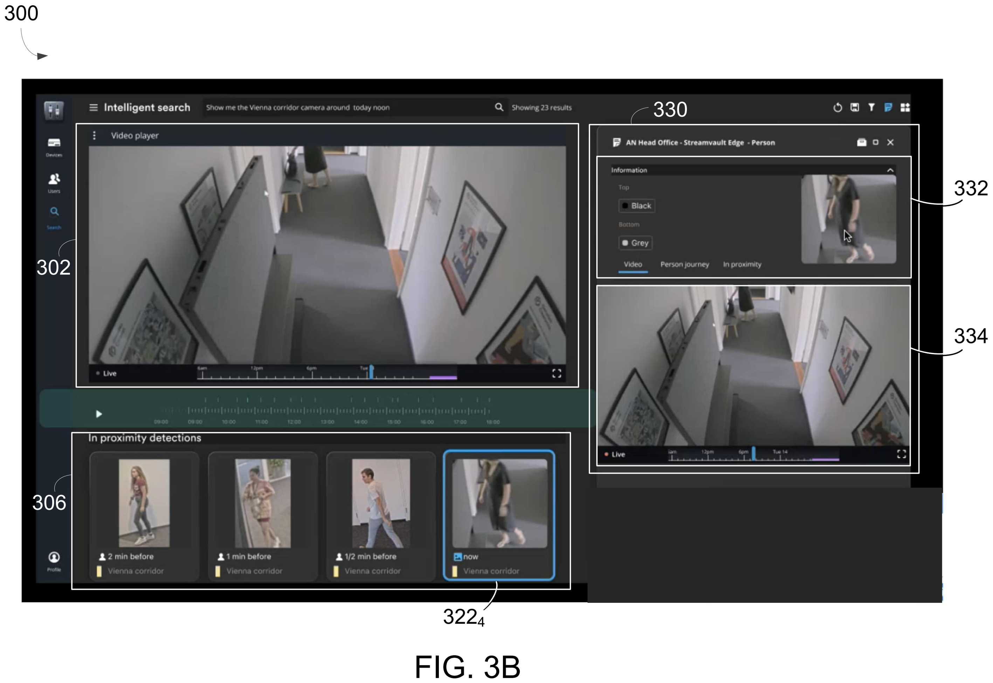

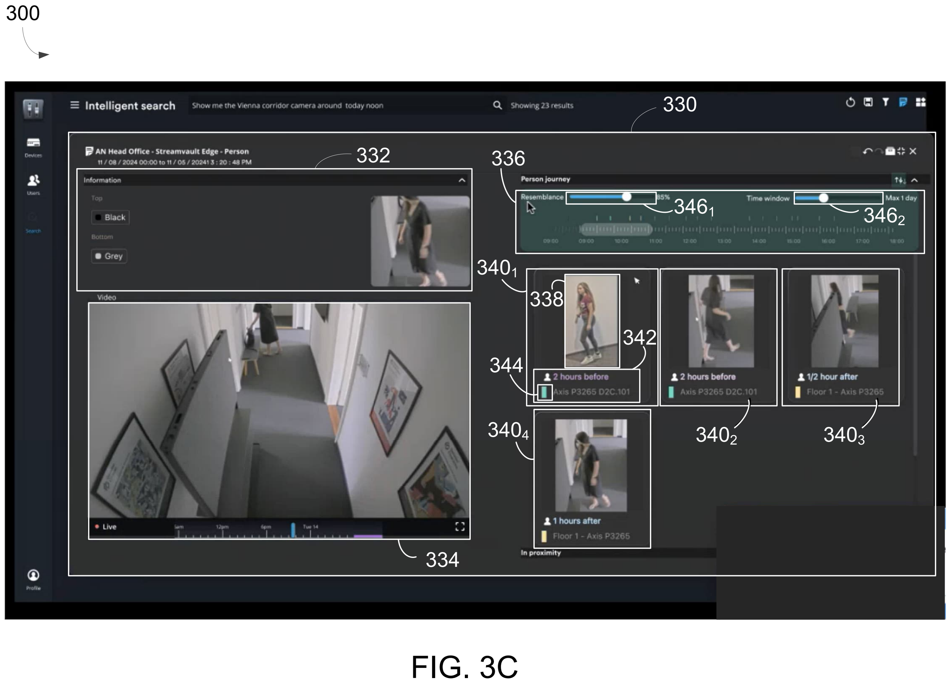

Reference will now be made to Fig. 3A, Fig. 3B, and Fig. 3C, which illustrate examples of the GUI 300 generated using the proximity search engine of Fig. 1, in accordance with one embodiment. It should be understood that the embodiments shown in Fig. 3A, Fig. 3B, and Fig. 3C are for illustrative purposes only. Any suitable information may be provided via the GUI 300 and the latter may be configured in any suitable manner.

Fig. 3A illustrates an example embodiment of a GUI 300 rendered on the display 126 of a client device 110. The GUI 300 may be one application amongst many in a surveillance software platform. The GUI 300 is interactive and configured to receive input from a user and display output to the user. The GUI 300 renders on a monitoring page thereof the results generated using the proximity search unit (reference 106 in Fig. 1) for the period of interest. As previously noted, the period of interest may vary depending to the application. In the illustrated embodiment, the search results span a time period ranging between November 5, 2024 at 12:15 PM and November 8, 2024 at 11:45 AM (going backwards in time). Other embodiments may apply.

The GUI 300 comprises several regions 302, 304, and 306, in which various information is displayed. It should be understood that the different regions 302, 304, 306 may be arranged in any suitable manner on the GUI 300.

Region 302 (titled "Video Player") displays a video feed 308 corresponding to video captured by a given camera (e.g., camera 102₁). The video feed 308 displayed in region 302 spans a predetermined time period. When the video feed 308 is paused at a given point in time (referred to herein as the "current time"), the corresponding video frame is shown in region 302. As previously noted, the video feed 308 may be a live video feed or a pre-recorded (i.e. archived) video feed.

A video timeline 310 associated with the video feed 308 may be displayed in region 302 to indicate a current play time of the video feed 308. As understood by those skilled in the art, the video timeline 310 may be displayed in any suitable format. In one embodiment, the video timeline 310 comprises a plurality of repeating major units sub-divided into a plurality of repeating minor units, the major units representing a first time increment (or interval) (e.g., five (5) seconds) and the minor units representing a second time increment (or interval) (e.g., one (1) second) smaller than the first time increment. Other embodiments may apply. A video feed control panel (not shown) may also be displayed in region 302, at any suitable location. The control panel may allow a user to perform (e.g., by interacting with corresponding control icons) control functions associated with the video feed 308 including, but not limited to, pausing or playing, fastforwarding, rewinding, or saving (e.g., for later viewing or editing) the video feed 308.

A status 312 of the video feed 308 may also be displayed in region 302. In the illustrated embodiment, the status 312 of the video feed 308 is indicated as "Live", meaning that the video feed 308 is displayed in region 302 of the GUI 300 in real-time, as the video is being captured by the given camera 102₁. It should be understood that, in other embodiments, the video feed may have a status 312 indicated as "Pre-recorded", meaning that the video feed 308 was previously recorded by the given camera 102₁ and has been retrieved by the proximity search engine (reference 106 in Fig. 1) from memory (reference 114 in Fig. 1) and/or from the data source(s) (reference 108 in Fig. 1) for display on the GUI 300 after the video has been captured and archived.

It should be understood that additional relevant information may be displayed in region 302 including, but not limited to, information indicative of a source of (e.g., the given camera 102₁) having captured the video feed 308 the is being displayed.

As noted herein, the user may initiate the proximity search in any suitable manner. In one embodiment, in order to initiate the proximity search, the user may actuate a dedicated interface element 320 (e.g., a toggle, a slider element, a button, or the like) displayed in the region 302. For instance, the user may be monitoring the video feed 308 (or multiple video feeds) displayed in the region 302 and then actuate the interface element 320 which causes the proximity search to begin. In other embodiments, in order to initiate the proximity search, the user may interact with a secondary listing of objects (e.g., best shots as provided by the given camera 102₁) presented in a side-pane (not shown) of the GUI 300.

In order to specify the proximity search criteria, the user may then interact with region 304 (titled "Filters"), which comprises multiple sub-regions as in 314₁, 314₂, and 314₃. Each sub-region 314₁, 314₂, and 314₃ of region 304 presents the user with one or more interface elements each associated with a corresponding search criterion. It should be understood that, while three (3) sub-regions 314₁, 314₂, and 314₃ are shown in the illustrated embodiment, this is for illustrative purposes only and any suitable number of sub-regions may apply. The first sub-region 314₁ allows the user to provide a search query using any suitable means. In one embodiment, the first sub-region 314₁ comprises a text box element 316 that allows the user to type their query using any suitable input device such as a touchscreen, keyboard, or the like. In the illustrated example, the user entered (e.g., typed) the following query: "Show me the Vienna corridor camera around today noon". It should be understood that the query may alternatively be voiced (e.g., through a microphone associated with the client device 110) and processed using any suitable means (e.g., using a speech-to-text processing technique or other speech recognition technique). Other embodiments may apply.

In some embodiments, one or more search criteria (also referred to herein as "filtering criteria") may be selectable by interacting with sub-regions 314₂ and 314₃. In the illustrated example, sub-region 314₂ comprises a first interface element (not shown) that enables the user to specify the camera (e.g. by selecting the camera identifier or camera location in a drop-down menu) whose video feed is to be displayed in region 302, and sub-region 314₃ comprises a second interface element (not shown) that enables the user to specify the period of interest. In the illustrated embodiment, the camera specified in sub-region 314₂ is located in the "Vienna corridor" (e.g., it is named "Vienna corridor camera"), and the period of interest specified in sub-region 314₃ is the timeframe ranging between November 5, 2024 at 12:15 PM and November 8, 2024 at 11:45 AM. This corresponds to the video feed 308 displayed in region 302 of the GUI 300.

An identification of the object of interest may be received in response to the user interacting with (e.g., hovering over, selecting, or clicking on, using a suitable input device such as a mouse, touchscreen, keyboard, or the like) the video feed 308 displayed in region 302. In the illustrated embodiment, the user indicated the object of interest by delineating (i.e. drawing) a bounding box 318 in a frame of the video feed 308, the bounding box 318 circumscribing an object of interest for which a proximity search is to be performed and thus indicating the location of the object of interest in the video frame. In the illustrated embodiment, the object of interest is a person ("Person A") depicted (at the top of the current frame of video feed 308) as standing next to a bench. In another embodiment, the user may click on the object of interest and the click interaction may result in the object of interest being selected (e.g., highlighted) in the current frame. It should however be understood that any other suitable user interaction with the video feed 308 may be used to specify the object of interest.

Once the search criteria have been specified in region 304 and the object of interest indicated by interacting with the video feed 308 displayed in region 302 of the GUI 300, the actuation of the interface element 320 displayed in the region 302 results in the generation of a query to identify, based on the previously-defined search criteria, one or more objects that were in proximity of the object of interest.

The results of the search performed by the proximity search engine 106 are displayed in region 306 of the GUI 300. As can be seen in Fig. 3A, region 306 (titled "In proximity detections") comprises a plurality of sub-regions (or sub-panes) as in 322₁, 322₂, 322₃, and 322₄ which each displays information regarding an object detected in proximity of the object of interest during the period of interest. It should be understood that while four (4) sub-regions as in 322₁, 322₂, 322₃, 322₄ are shown in the illustrated embodiment, this is for illustrative purposes only and any suitable number of sub-regions may be displayed depending on the number of objects detected in proximity of the object of interest during the period of interest. Each sub-region 322₁, 322₂, 322₃, 322₄ displays a thumbnail 324 corresponding to an image (e.g., a frame from a video feed) captured by a camera 102₁, 102₂, ..., 102_{N} during the period of interest. The thumbnail 324 is thus representative of an object detected in proximity of the object of interest at a given time. The sub-regions 322₁, 322₂, 322₃, 322₄ are arranged in region 306 of the GUI 300 in chronological order of the time at which the respective images displayed in the thumbnails 324 were captured (i.e. based on the temporal proximity between the object of interest and the detected objects). In particular, in the illustrated example, the sub-regions 322₁, 322₂, 322₃, 322₄ are positioned in the region 306 chronologically, from left to right, relative to the position in time of the video feed 308 shown in the main region 302. Thus, the first (i.e. leftmost) sub-region 322₁ corresponds to the very first object detected in proximity of the object of interest, whereas the fourth (i.e. rightmost) sub-region 322₁ corresponds to the object detected most recently in proximity of the object of interest.

Each sub-region 322₁, 322₂, 322₃, 322₄ further comprises an area 326 in which is provided a proximity indication indicative of the extent of proximity between the object of interest and the detected object depicted in the respective sub-region 322₁, 322₂, 322₃, 322₄. In the illustrated example, in addition to displaying an image the one or more other persons who were recently seen in proximity to the initially-selected person ("Person A") depicted in the video feed 308, each sub-region 322₁, 322₂, 322₃, 322₄ provides the proximity indication comprising the location where these other persons were when they were proximate to the initially-selected person and how long ago these other persons were in proximity to the initially-selected person. The location where the other persons were when they were proximate to the initially-selected person may be determined based on an identification of the camera 102₁, 102₂, ..., 102_{N} that captured the image displayed in each sub-region 322₁, 322₂, 322₃, 322₄. In particular, the first sub-region 322₁ presents (as shown in thumbnail 324) an image of a first person ("Person B1") captured two (2) minutes before the current time (as indicated in area 326), the second sub-region 322₂ presents an image of a second person ("Person B2") captured one (1) minute before the current time, the third sub-region 322₃ presents an image of a third person ("Person B3") captured 30 seconds (or 1/2 minute) before the current time, and the fourth sub-region 322₄ presents an image of a fourth person ("Person B4") captured at the current time, all images being captured by a camera positioned in the "Vienna corridor".

In one embodiment, colour coding (e.g., a colour indicator 328) is used to render the proximity indication in the area 326 of each sub-region 322₁, 322₂, 322₃, 322₄. This is illustrated in Figs. 3A and 3B, where the area 326 of each sub-region 322₁, 322₂, 322₃, 322₄ displays a yellow indicator next to the spatial proximity indication ("Vienna corridor") and the temporal proximity indication ("2 min before", "1 min before", "1/2 min before", and "now"). In the example of Fig. 3C, object(s) detected before the current time are assigned a green indicator and object(s) detected after the current time are assigned a yellow indicator.

Referring now to Fig. 3B, the GUI 300 may be configured such that the user may interact with each sub-region 322₁, 322₂, 322₃, 322₄ in order to obtain additional information regarding specific detected objects. In one embodiment, interaction with (e.g., a click interaction with or selection of) a given sub-region 322₁, 322₂, 322₃, 322₄ causes the display of information in an additional region 330 of the GUI 300. It should however be understood that the information may be displayed in any suitable manner, such as in an existing region of the GUI 300, as a pop-up window, or the like. In the illustrated example, interaction with the sub-region 322₄ causes the display in region 330 of an information pane 332, which provides details about the object (e.g., Person B4) originally depicted in sub-region 322₄ in addition to displaying the thumbnail (reference 324 in Fig. 3A) associated with the sub-region 322₄. Any suitable details including, but not limited to, attributes of the object, may be provided in the information pane 332. For example, when the depicted object is a vehicle, vehicle attributes (e.g., type, color, make model, license plate identifier, etc.) may be provided. When the depicted object is a person, attributes such as physical characteristics (e.g., height, hair color, eye color, etc.), physical appearance (e.g., type of clothing, color of clothing, type of shoes, color of shoes, glasses, tattoos, scars, and any other identifying mark) may be provided. In the illustrated example, the information pane 332 provides an indication of the clothing (i.e. black top and grey bottom) of Person B4. Interaction with the sub-region 322₄ may further cause the display in region 330 of a video pane 334, which displays a video feed captured in relation to the object (e.g., Person B4) depicted in sub-region 322₄, during the period of interest.

As shown in Fig. 3C, the additional region 330 may provide further information regarding the given detected object (e.g., Person B4) depicted in sub-region 322₄. In one embodiment, the further information may comprise additional images of the given detected object, captured at different times during the period of interest. In the illustrated example, the additional images are shown (e.g., as thumbnails 338) in respective sub-regions (or sub-panes) 340₁, 340₂, 340₃, and 340₄. Similar to the sub-regions 322₁, 322₂, 322₃, 322₄, each sub-region 340₁, 340₂, 340₃, 340₄, in addition to comprising the thumbnail 338, also comprises an area 342 which provides a proximity indication regarding the extent of proximity between the initially-selected object (e.g., Person A shown in video feed 308 of Fig. 3A) and the given detected object (e.g., Person B4). The proximity indication comprises the location where the given detected object was when proximate to the initially-selected object of interest (or an identification of the camera 102₁, 102₂, ..., 102_{N} that captured the image displayed in thumbnail 338) and how long ago the given detected object was in proximity to the initially-selected person (Person A). In Fig. 3C, the first sub-region 340₁ presents (as shown in thumbnail 338) an image of Person B4 captured two (2) hours before the current time (as indicated in area 342) by a camera having "Axis P3265 D2C.101" as its identifier, the second sub-region 340₂ presents an image of Person B4 also captured two (2) hours before the current time by the camera having "Axis P3265 D2C.101" as its identifier, the third sub-region 340₃ presents an image of Person B4 captured half (1/2) an hour after the current time by a camera having "Floor 1 - Axis P3265" as its identifier, and the fourth sub-region 340₄ presents an image of Person B4 captured one (1) hour after the current time by the camera having "Floor 1 - Axis P3265" as its identifier. The area 342 of each sub-region 340₁, 340₂, 340₃, 340₄ further displays a colour indicator 344 as an indication of temporal proximity (e.g., a green indicator when Person B4 is detected before the current time, and a yellow indicator when Person B4 is detected after the current time).

The information provided in the additional region 330 may be filtered in response to the user interacting with an interface element 336. In the illustrated embodiment, the interface element 336 comprises a first slider element 346₁ configured to filter results according to the level of resemblance between detected objects and a second slider element 346₂ configured to filter results according to the time window for which the proximity search is to be performed (i.e. by varying the period of interest). Other embodiments may apply.

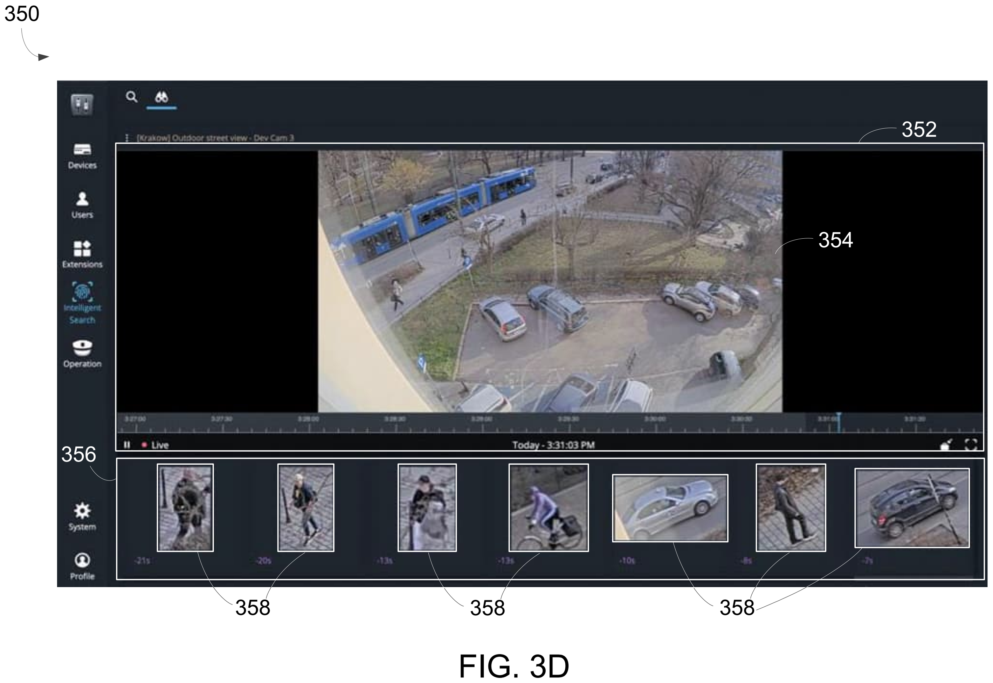

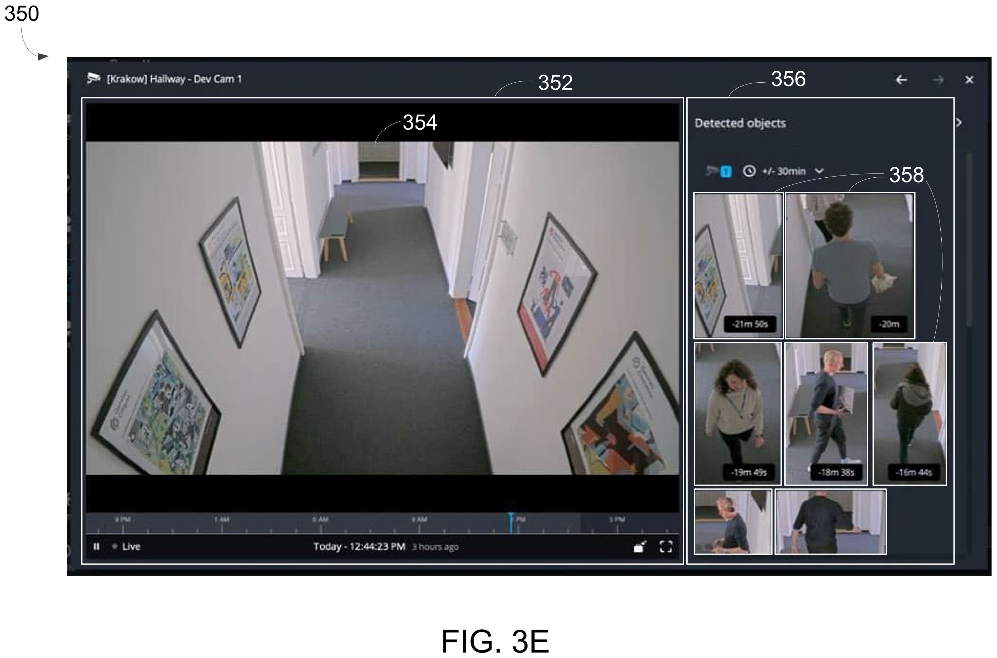

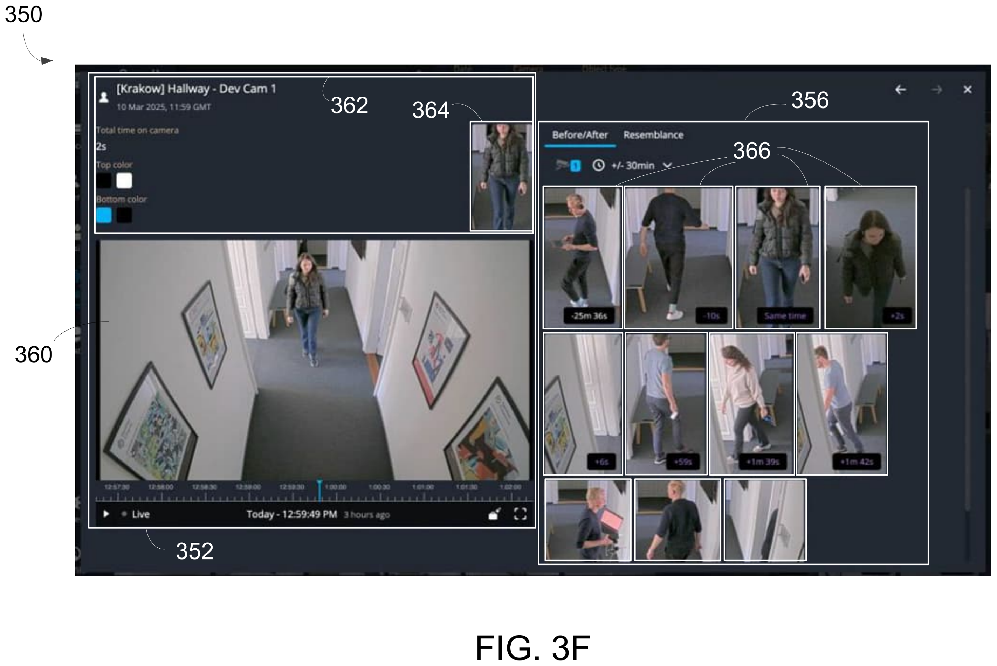

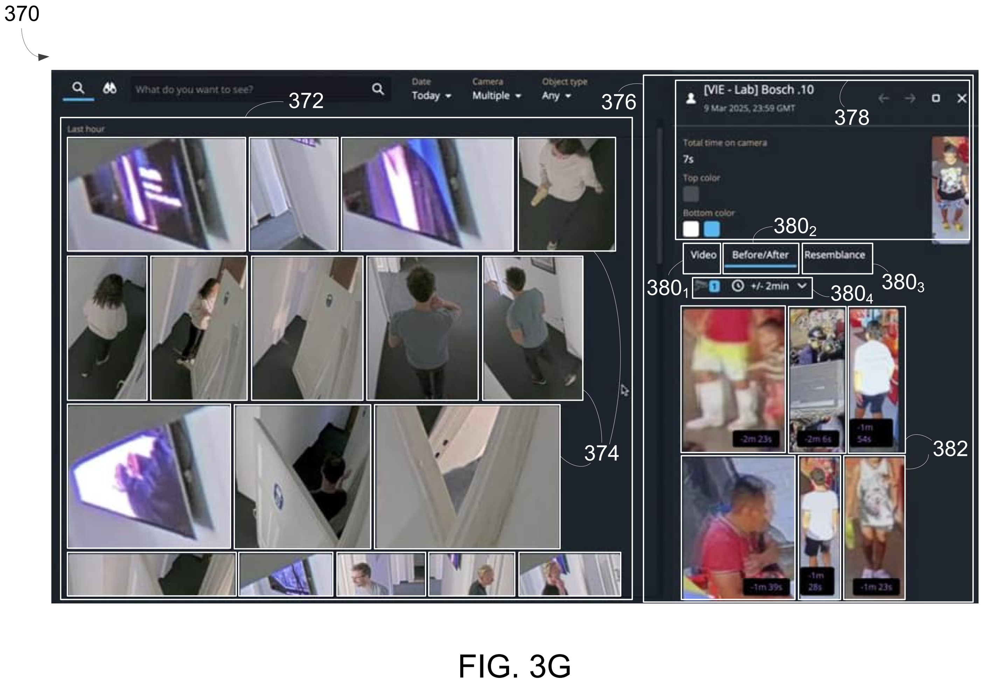

Reference will now be made to Fig. 3D, Fig. 3E, Fig. 3F, and Fig. 3G, which illustrate examples of the GUI generated using the proximity search engine of Fig. 1, in accordance with another embodiment. It should be understood that the embodiments shown in Fig. 3D, Fig. 3E, Fig. 3F, and Fig. 3G are for illustrative purposes only. Any suitable information may be provided via the GUI and the latter may be configured in any suitable manner.

Fig. 3D illustrates an example of a GUI 350 rendered on the display 126 of a client device 110. Using the GUI 350, a user of the surveillance system (reference 100 in Fig. 1) can monitor a given camera (as in camera 102₁ of Fig. 1) in a monitoring task. It should be understood that the user may also monitor a grid of several cameras 102₁, 102₂, ..., 102_{N}, in the monitoring task. In the illustrated embodiment, a first region 352 of the GUI 350 displays a video feed 354 (and the associated video timeline, video status, and any other relevant information, not shown) corresponding to video captured by the given camera 102₁. The GUI 350 further comprises a second region 356 in which is presented a series of thumbnails 358 corresponding to best shot images of one or more objects detected by the given camera 102₁. Although the second region 356 (and accordingly the thumbnails 358) is illustrated as being positioned in a bottom portion of the GUI 350, i.e. below the first region 352, it should be understood that this is for illustrative purposes only. Fig. 3E illustrates another example of the GUI 350 in which the second region 356 (and accordingly the thumbnails 358) forms a side panel positioned to the right of the first region 352, rather than below the latter as in Fig. 3D. Other embodiments may apply.

The user may interact (e.g., hover over, select, or click on, using a suitable input device such as a mouse, touchscreen, keyboard, or the like) with the GUI 350 to select a particular object of interest among the objects detected by the given camera 102₁. This selection may be made in any suitable manner. The user may, for example, choose the particular object by selecting a corresponding one of the thumbnails 358. Alternatively, the user may draw a bounding box around the object of interest in a frame of the video feed 354, as described herein above with reference to Fig. 3A. As can be seen in Fig. 3F, in response to the user selecting the object of interest, the first region 352 of the GUI 350 presents a relevant portion 360 of the video feed (reference 354 in Fig. 3E) where the object of interest is shown, and an information pane 362 which provides a thumbnail 364 of the object of interest and any suitable detail associated with the proximity search. In the illustrated embodiment, the information pane 362 provides including an identification of the given camera 102₁, a total time during which the object of interest was in the field of view of the given camera 102₁, and attributes of the object of interest, namely the color of clothing (e.g., colours of a top and colours of a bottom) worn by a person detected by the given camera 102₁. The second region 356 (which is illustrated in Fig. 3F as a side panel positioned to the right of the first region 352) of the GUI 350 further presents (e.g., as thumbnails 366) other objects which were temporally and spatially proximate to the particular object of interest.

Fig. 3G illustrates another example of a GUI 370 rendered on the display 126 of a client device 110, in accordance with another embodiment. The GUI 370 may be generated as a result of the user submitting a query for a particular object of interest (e.g., as freeform text), rather than identifying the object of interest by interacting with a displayed video feed 370 (as described herein above with reference to Fig. 3D for example). The query is interpreted by the system 100 and the outcome of the query is presented in a first (e.g., left) region 372 of the GUI 370. In the illustrated embodiment, the outcome of the query is presented as a series of sub-panes 374 each depicting the particular object of interest as detected by given one(s) of the cameras (references 102₁, 102₂, ..., 102_{N} in Fig. 1). The user may then interact with a given sub-pane 374 to select a given one of the results presented in the first region 372 (i.e. the object of interest as detected by a given camera 102₁ at a given point in time), which causes additional information to be presented in a second (e.g., right) region 376 of the GUI 370.

The second region 376 of the GUI 370 comprises an information pane 378 configured to present information similar to that presented in the information pane 362 of Fig. 3F, including, but not limited to, an identification of the given camera 102₁, a total time during which the object of interest was in the field of view of the given camera 102₁, and attributes associated the object of interest (e.g., color of clothing) detected by the given camera 102₁ at the given point in time. The second region 376 may further present one or more user-selectable interface elements as in 380₁, 380₂, 380₃, 380₄. The "Video" interface element 380₁ may be used to display a video pane (not shown) that displays a video feed captured in relation to a given object depicted in the first region 372. The "Resemblance" interface element 380₃ may be used to filter results according to the level of resemblance between two (or more) detected objects depicted in the first region 372. The "Before/After" interface element 380₂ may be used to find objects which were temporally and spatially proximate to the particular object of interest detected by the given camera 102₁ during a given time period, the given time period being some time before and after the current time. The user may select the "+/- 2 min" interface element 380₄ to specify the given time period as being two (2) minutes before and two (2) minutes after the current time (although it should be understood that any other suitable time period may apply). As a result of selection of the "Before/After" interface element 380₂ and of the "+/- 2 min" interface element 380₄, a series of thumbnails 382 depicting all objects that were temporally and spatially proximate to the object of interest two (2) minutes before and after the current time is shown in the second region 376.

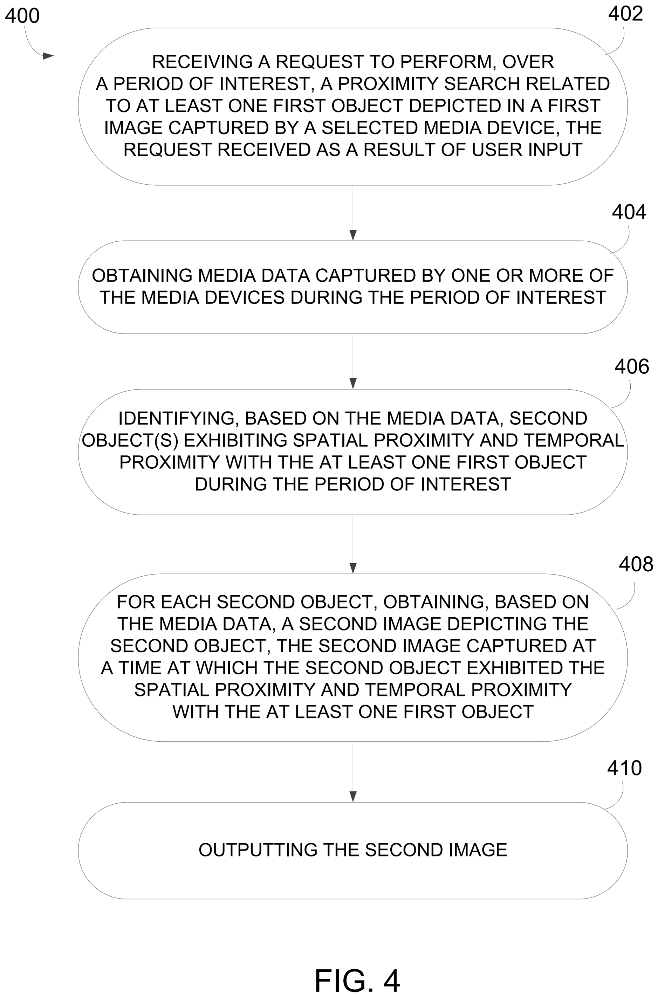

With reference to Fig. 4, there is illustrated a flowchart of an example method 400 for proximity searching in a surveillance system, such as the system 100 of Fig. 1. The method 400 may be performed by the proximity search engine 106 of Fig. 1. Step 402 comprises receiving a request to perform, over a period of interest, a proximity search related to at least one first object depicted in a first image captured by a selected one of the plurality of media devices. The first image may be a frame from a video feed (e.g., live or archived) captured by a given one of the cameras 102₁, 102₂, ..., 102_{N} of Fig. 1 (e.g., camera 102₁). The request may be received at step 402 as a result of user input, such as a user interaction with the first image (e.g., a delineation of at least one bounding box circumscribing the at least one first object in the first image or a click interaction selecting the at least one first object in the first image) or the actuation of an interface element (e.g., dedicated button) to initiate the proximity search, in the manner described herein above.

Step 404 comprises obtaining media data captured by one or more of the plurality of media devices during the period of interest and step 406 comprises identifying, based on the media data (e.g., acquired by the given camera as in 102₁ that initially detected the at least one first object and/or by multiple ones of the cameras 102₁, 102₂, ..., 102_{N}), one or more second objects exhibiting a spatial proximity and a temporal proximity with the at least one first object during the period of interest.

In one embodiment, in order to identify the second object(s) at step 406, the method 400 may comprise tracking the at least one first object through the field of view of (i.e. within the images acquired by) the given camera 102, (and/or the multiple ones of the cameras 102₁, 102₂, ..., 102_{N}). Such tracking results in the generation of first metadata associated with the first object, the first metadata comprising, for instance, a unique identifier and a timestamp at which the first object is detected within the images. Any other object detected within the images acquired by (i.e. seen within the field of view of) the given camera 102₁ (and/or the multiple ones of the cameras 102₁, 102₂, ..., 102_{N}) is also tracked, resulting in the generation of second metadata associated with each other object as detected. The first metadata is compared to the second metadata to determine a degree of temporal and spatial proximity between each detected object and the at least one first object. The second object(s) are then identified based on the comparison. For example, the comparison of the timestamps may provide an indication of temporal proximity, as described herein above. As also described herein above, in some embodiments, being seen by the same camera 102₁, 102₂, ..., 102_{N} may be sufficient as an indicator of spatial proximity. Alternatively, and as described herein above, the first and second metadata may be compared by comparing distances between objects (e.g., distances between bounding boxes associated with the objects, distances between cameras 102₁, 102₂, ..., 102_{N} having seen the objects, for instance based on a topological map, etc.) in order to determine spatial proximity.

In another embodiment, in order to identify the second object(s) at step 406, the method 400 may first comprise implementing an object segmentation technique to detect and localize the at least one first object in the first image based on the request, associating a unique representation with the at least one first object, and tracking the at least one first object within additional images associated with the media data captured by the plurality of media devices during the period of interest. The second object(s) may then be identified at step 406 by querying at least one database having a plurality of reference representations each associated with an object depicted in the additional images associated with the media data, computing a similarity measure between the representation associated with the at least one first object and the plurality of reference representations, and identifying the one or more second objects based on the similarity measure.

Steps 408 and 410 are then performed for each of the one or more second objects. Step 408 comprises obtaining, based on the media data, a second image depicting the second object, the second image captured at a time at which the second object exhibited the spatial proximity and the temporal proximity with the at least one first object. Step 410 comprises outputting (e.g., rendering on the display 126 of the client device 110 of Fig. 1) the second image. The second image is output for each of the one or more second objects. In some embodiments, a plurality of second images arranged in chronological order based on the temporal proximity may be rendered on the display 126 at step 410.

In some embodiments, the method 400 may further comprise generating, based on the media data, an indication of the spatial proximity and the temporal proximity between the second object and the at least one first object. This may comprise generating an indication of at least one of an elapsed time since the second object exhibited the spatial proximity and the temporal proximity with the at least one first object, a duration for which the second object exhibited the spatial proximity and the temporal proximity with the at least one first object, a location of the second object when the second object exhibited the spatial proximity and the temporal proximity with the at least one first object, and a distance between the second object and the at least one first object when the second object exhibited the spatial proximity and the temporal proximity with the at least one first object. In one embodiment, a visual indicator having a plurality of colours associated therewith may be generated, with each colour being representative of a given level of the spatial proximity and the temporal proximity.

In some embodiments, step 410 may further comprise outputting the indication of the spatial proximity and the temporal proximity along with the second image.

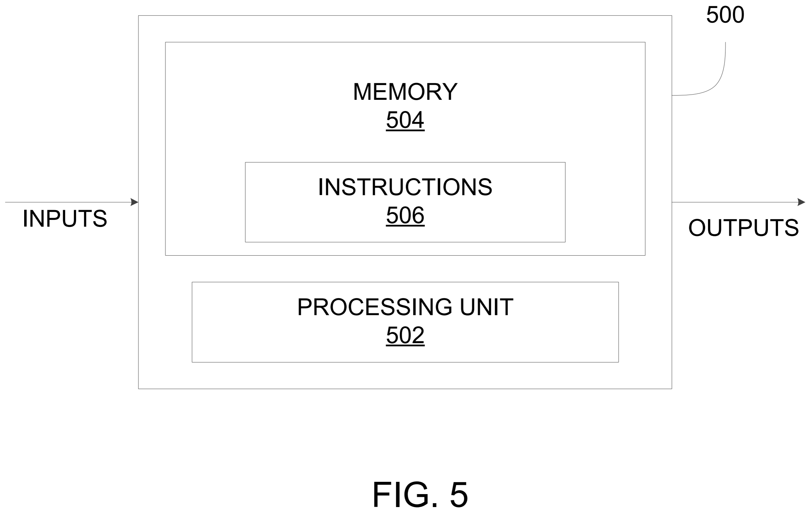

Fig. 5 is a schematic diagram of computing device 500, which may be used to implement one or more components of the system 100 of Fig. 1, such as the proximity search engine 106, and/or to implement the method 400 of Fig. 4. **In** certain embodiments, the computing device 500 is operable to register and authenticate users (using a login, unique identifier, and password for example) prior to providing access to applications, a local network, network resources, other networks, and network security devices. The computing device 500 may serve one user or multiple users.

The computing device 500 comprises a processing unit 502 and a memory 504 which has stored therein computer-executable instructions 506. The processing unit 502 may comprise any suitable devices configured to implement the functionality of the method 400 such that instructions 506, when executed by the computing device 500 or other programmable apparatus, may cause the functions/acts/steps performed by method 400 as described herein to be executed. The processing unit 502 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitable programmed or programmable logic circuits, custom-designed analog and/or digital circuits, or any combination thereof. While in the example of Fig. 5, the processing unit 502 is shown as being unitary, the processing unit 502 may also be multicore, or distributed (e.g., a multi-processor).

The memory 504 may comprise any suitable known or other machine-readable storage medium. The memory 504 may comprise non-transitory computer readable storage medium, for example, but not limited to, an electronic, magnetic, optical, electromagnetic, infrared, or semiconductor system, apparatus, or device, or any suitable combination of the foregoing. The memory 504 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 504 may comprise any storage means (e.g. devices) suitable for retrievably storing machine-readable instructions 506 executable by the processing unit 502.

The memory 504, though shown as unitary for simplicity in the example of Fig. 5, may comprise multiple memory modules and/or caching. In particular, the memory 504 may comprise several layers of memory such as a hard drive, external drive (e.g. SD card storage) or the like and a faster and smaller RAM module. The RAM module may store data and/or program code currently being, recently being or soon to be processed by the processing unit 502 as well as cache data and/or program code from a hard drive. A hard drive may store program code and be accessed to retrieve such code for execution by the processing device 502 and may be accessed by the processing device 502 to store and access data. The memory 504 may have a recycling architecture for storing, for instance, data source and/or database coordinates, where older data files are deleted when the memory 504 is full or near being full, or after the older data files have been stored in memory 504 for a certain time.

The memory 504 stores program instructions and data used by the processing unit 502 to implement the data retention functions described herein. The memory 504 may also store locally media stream data, acting as a local database, as well as store information regarding the electronic devices 110. For example, the memory 504 may store the identity, IP address, and configuration (e.g., type, transmission capability, reception capability, etc.) of the electronic devices 110.

The embodiments of the methods, systems, devices, and computer-readable media described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the foregoing discussion, numerous references have been made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The foregoing discussion provides many example embodiments. Although each embodiment represents a single combination of inventive elements, other examples may include all possible combinations of the disclosed elements. Thus, if one embodiment comprises elements A, B, and C, and a second embodiment comprises elements B and D, other remaining combinations of A, B, C, or D, may also be used.

The terms "connected" or "coupled to", as well as any similar terms, may include both direct coupling (in which two elements that are coupled to each other contact each other) and indirect coupling (in which at least one additional element is located between the two elements).

The use of numerical ranges by endpoints in the present disclosure should be understood as including all numbers within that range (e.g., 1 to 5 includes 1, 1.25, 2, 2.5, 3, 3.69, 4, 4.33, 5, etc.). Where a range of values is qualified as being "greater than", "less than", etc., of a particular value, that value may or may not be included within the range, as appropriate.

Any direction or orientation described in the present disclosure, including but not limited to "top", "bottom", "left", "right", "upper", "lower", "above", below", as well as other directions and orientations, are described herein for clarity, and should be understood in reference to the drawings. These and other similar terms should not be understood as limiting of an actual device or system or of use of the device or system. Many of the devices, articles, or systems described in the present disclosure may be used in a number of suitable directions and orientations.

Any citation to references in this disclosure and during the prosecution thereof is made out of an abundance of caution. No citation should be construed as an admission that the cited reference qualifies as prior art or comes from an area that is analogous or directly applicable to the present teachings.

To aid the Patent Office, as well as any readers of any patent issued from this application, in interpreting the claims appended hereto, it is noted that none of the appended claims or elements of the appended claims, as pending or as granted, are intended to invoke 35 U.S.C. 112(f) unless the words "means for" or "step for" are explicitly used in the particular claim or claim or claim element.

The technical solution of embodiments may be in the form of a software product. The software product may be stored in a non-volatile or non-transitory computer-readable storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and at least some of the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Although the embodiments have been described in detail, it should be understood that various changes, substitutions, and alterations can be made herein without departing from the scope as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. Accordingly, the examples described above and illustrated herein are intended to be examples only, and the appended claims are intended to include within their scope such processes, machines, manufacture, compositions of matter, means, methods, or steps.

Generally, all terms used in the claims are to be interpreted according to their ordinary meaning in the relevant technical field, unless explicitly defined otherwise herein. All references to a/an/the element, apparatus, component, means, step, etc., are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second", etc. for different features/components of the present disclosure are only intended to distinguish the features/components from other similar features/components and not to impart any order or hierarchy to the features/components.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method for proximity searching in a surveillance system, the surveillance system comprising a plurality of media devices deployed at a monitored location, the method comprising:
receiving a request to perform, over a period of interest, a proximity search related to a first object depicted in a first image captured by a selected one of the plurality of media devices, the request received as a result of user input;
obtaining media data captured by one or more of the plurality of media devices during the period of interest;
identifying, based on the media data, one or more second objects exhibiting a spatial proximity and a temporal proximity with the first object during the period of interest; and
for each of the one or more second objects,
obtaining, based on the media data, a second image depicting the second object, the second image captured at a time at which the second object exhibited the spatial proximity and the temporal proximity with the first object, and
outputting the second image.

2. The method of claim 1, wherein the proximity search relates to a first person, and wherein the one or more second objects are one or more second persons.

3. The method of claim 1 or 2, further comprising, prior to receiving the request to perform the proximity search:
receiving a demand to display selected media data captured by the selected media device;
displaying the selected media data and an indication of a plurality of potential objects of interest depicted in the selected media data; and
receiving the user input comprising a selection of the first object among the plurality of potential objects of interest.

4. The method of any one of claims 1 to 3, wherein obtaining the media data comprises one of:
obtaining the media data captured by the selected media device;
obtaining the media data captured by ones of the plurality of media devices other than the selected media device; and
obtaining the media data captured by at least some of the plurality of media devices.

5. The method of any one of claims 1 to 4, wherein identifying the one or more second objects comprises:
tracking the first object within a plurality of images associated with the media data, thereby generating first metadata;
tracking a plurality of objects within the plurality of images, thereby generating second metadata;
comparing the first metadata to the second metadata to determine a degree of the spatial proximity and the temporal proximity that each of the plurality of objects exhibits with the first object; and
identifying the one or more second objects among the plurality of objects based on the comparing.

6. The method of any one of claims 1 to 5, further comprising:
implementing an object segmentation technique to detect the first object in the first image based on the request; and
tracking the first object within additional images associated with the media data.

7. The method of claim 6, further comprising associating a first representation with the first object, wherein the first object is tracked within the additional images using the first representation, preferably wherein identifying the one or more second objects comprises:
querying at least one database having stored therein, for each object depicted in the additional images, a second representation, time metadata indicative of a time at which the object was detected, and location metadata indicative of a location of the object when detected; and
identifying the one or more second objects based on the second representation, the time metadata, and the location metadata.

8. The method of any one of claims 1 to 7, further comprising:
generating, based on the media data, an indication of the spatial proximity between the second object and the first object; and
outputting the indication of the spatial proximity along with the second image.

9. The method of any one of claims 1 to 8, further comprising:
generating, based on the media data, an indication of the temporal proximity between the second object and the first object; and
outputting the indication of the temporal proximity along with the second image.

10. The method of any one of claims 1 to 9, further comprising generating and outputting an indication of at least one of an elapsed time since the second object exhibited the spatial proximity and the temporal proximity with the first object, a duration for which the second object exhibited the spatial proximity and the temporal proximity with the first object, a location of the second object when the second object exhibited the spatial proximity and the temporal proximity with the first object, and a distance between the second object and the first object when the second object exhibited the spatial proximity and the temporal proximity with the first object.

11. The method of any one of claims 1 to 10, further comprising selecting one of a plurality of colours for a visual indicator, each colour of the plurality of colours associated with a respective level of a plurality of levels representative of the spatial proximity and the temporal proximity, and displaying the visual indicator as an indication of the spatial proximity and the temporal proximity.

12. The method of any one of claims 1 to 11, wherein the second image is output for each of the one or more second objects to obtain a plurality of second images arranged in chronological order based on the temporal proximity.

13. The method of any one of claims 1 to 12, wherein the user input comprises one of:
a delineation of at least one bounding box circumscribing the first object in the first image;
a click interaction selecting the first object in the first image; and
an actuation of an interface element configured to initiate the proximity search when actuated.

14. The method of any one of claims 1 to 13, wherein each of the first image and the second image is one of an entire frame from a video feed, a portion of a frame from the video feed, and a portion of the video feed, preferably wherein the video feed is a live video feed captured in real-time or an archived video feed retrieved from memory.

15. A system for proximity searching in a surveillance system, the surveillance system comprising a plurality of media devices deployed at a monitored location, the system comprising:
a processing unit; and
a non-transitory computer-readable medium having stored thereon program instructions executable by the processing unit for:
receiving a request to perform, over a period of interest, a proximity search related to first object depicted in a first image captured by a selected one of the plurality of media devices, the request received as a result of user input;
obtaining media data captured by one or more of the plurality of media devices during the period of interest;
identifying, based on the media data, one or more second objects exhibiting a spatial proximity and a temporal proximity with the first object during the period of interest; and
for each of the one or more second objects,
obtaining, based on the media data, a second image depicting the second object, the second image captured at a time at which the second object exhibited the spatial proximity and the temporal proximity with the first object, and
outputting the second image.
